# EUROPEAN PATENT SPECIFICATION

(11) **EP 4 008 696 B1**
(45) Date of publication and mention of the grant of the patent: **04.06.2025**
(21) Application number: 20850270.8
(22) Date of filing: 30.07.2020
(51) Int. Cl.: C03C 17/30, C08G 65/336, C09D 171/02, C09K 3/18, C08L 71/00, C09D 5/16

(54) **SURFACE TREATMENT AGENT**
OBERFLÄCHENBEHANDLUNGSMITTEL
AGENT DE TRAITEMENT DE SURFACE

(30) Priority: 02.08.2019 JP 2019143001; 17.01.2020 JP 2020006168
(43) Date of publication of application: 08.06.2022
(73) Proprietor: Daikin Industries, Ltd., Osaka-shi, Osaka 530-0001 (JP)
(72) Inventor: YAMASHITA, Tsuneo, Osaka-shi, Osaka 530-8323 (JP); MAEHIRA, Takeshi, Osaka-shi, Osaka 530-8323 (JP); MITSUHASHI, Hisashi, Osaka-shi, Osaka 530-8323 (JP)
(74) Representative: Hoffmann Eitle
(86) International application number: PCT/JP2020/029346
(87) International publication number: WO 2021/024921

(56) References cited:
- EP-A1- 1 997 824
- WO-A1-2017/022437
- WO-A1-2017/038830
- WO-A1-2017/038832
- WO-A1-2018/047695
- WO-A1-2019/088116
- WO-A1-2020/040037
- CN-A- 109 651 941
- DE-A1- 19 606 011
- JP-A- 2014 218 639
- JP-A- 2015 168 785
- JP-A- 2015 199 906
- JP-A- 2017 082 194
- JP-A- 2017 133 003
- JP-A- 2018 111 816
- JP-A- 2019 035 069

## Description

### Technical Field

The present disclosure relates to a surface-treating agent.

### Background Art

Certain types of fluorine-containing silane compounds are known to be capable of providing excellent water-repellency, oil-repellency, antifouling property, and the like when used in surface treatment of a base material. A layer formed from a surface-treating agent containing a fluorine-containing silane compound (hereinafter, also referred to as a "surface-treating layer") is applied as a so-called functional thin film to a large variety of base materials such as glass, plastics, fibers, and building materials.

A known such fluorine-containing compound is a perfluoropolyether group-containing silane compound having a perfluoropolyether group in the molecular backbone and a hydrolyzable group bonding to a Si atom at the molecular terminal or in the terminal part (JP-A-2014-218639 and JP-A-2017-082194.

WO 2019/088116 (EP-A-3 705 545) discloses a surface treatment composition comprising a perfluoropolyether group-containing silane compound (1) and a solvent, wherein the proportion of the compound (1) based on 100 pbm of a total amount of the compound (1) and the solvent is 30-99 pbm.

CN-A-109 651 941 describes a surface treating agent comprising 60-70 mass% of a perfluoropolyether trimethoxy silane (A) 15-30 mass% of a perfluoropolyether methyl dimethoxysilane (B) and 5-15 mass% of a C₇₋₁₀-perfluoroalkyl trimethoxy silane (C).

EP-A_1 997 824 relates to a surface treating agent comprising a specified perfluoropolyether-modified aminosilane of a general formula (1).

DE-A-19606011 discloses articles and materials with antifouling surface properties obtained by coating with a formulation containing organofunctional silanes and fluoroorganosilanes and/or their hydrolysates and/or condensation products.

JP-A-2014-218639 (EP-A-2 915 833) addresses surface treatment composition containing specified perfluoro (poly)ether group-containing silane compounds (1a) or (1b) capable of forming a surface treatment layer having water repellency, oil repellency, antifouling property and friction durability.

JP-A-2017-082194 (EP-A-3 333 172) describes perfluoro(poly)ether group-containing silane compounds of general formulae (1a) and (1b) having water repellency, oil repellency and antifouling property and being capable of forming a layer having high friction durability.

### Summary of Invention

### Technical Problem

The surface-treating layer as described above may be required to have further better friction durability.

### Solution to Problem

The present invention provides an agent ("the present agent"), which is a surface-treating agent comprising a compound (A) and a compound (B) which are represented by formula (1) or (2):

R^{F1}_{α}-X^{A}-R^{Si}_{β} (1)

R^{Si}_{γ}-X^{A}-R^{F2}-X^{A}-R^{Si}_{γ} (2)

wherein, each independently at each occurrence,
- R^{F1}: is Rf¹-R^{F}-O_{q}-;
- R^{F2}: is -Rf²ₚ-R^{F}-O_{q}- ;
Rf¹ is C₁₋₁₆-alkyl optionally substituted with one or more F;
Rf² is C₁₋₆-alkylene optionally substituted with one or more F;
R^{F} is a divalent fluoropolyether group;
p is 0 or 1;
q is 0 or 1;
- X^{A}: is a single bond or a di- to decavalent organic group;
- R^{Si}: is a group having a Si atom bonded to a hydrolyzable group;
- α: is an integer of 1-9;
- β: is an integer of 1-9; and
- γ: is an integer of 1-9;
wherein
in compound (A):
- R^{F}: is R^{F11} which is a group of the formula:

- (OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein R^{Fa} each independently is H, F or Cl; and a-f each independently are an integer of 0-200, with (a+b+c+d+e+f) ≥ 1, and the order of the repeating units in parentheses is not limited;
- R^{Si}: each independently is of the formula (S11) or (S12):

-C(Z¹-SiR²¹ₚ₁R²²_{q1})₃ (S11)

-Si(Z¹-SiR²¹ₚ₁R²²_{q1})₃ (S12)

wherein, each independently at each occurrence,
Z¹ is C₁₋₆-alkylene, -(CH₂)_{z1}-O-(CH₂)_{z2}- or - (CH₂)_{z3}-phenylene-(CH₂)z₄-, wherein z1 is an integer of 1-6, and z2-z4 each independently are an integer of 0-6;
- R²¹: is OH or a hydrolyzable group;
- R²²: is H or a monovalent organic group;
- p1: is an integer of 1-3; and
- q1: is an integer of 0-2; and
in compound (B):
- R^{F}: is R^{F21}; which is a group of the formula: -(OC₆F₁₂)ₐ-(OC₅F₁₀)_{b}-(OC₄F₈)_{c}-(OC₃R^{Fa}₆)₄-(OC₂F₄)ₑ-(OCF₂)_{f}- wherein a-f and R^{Fa} are as defined for R^{F11}, provided that the structure of each of the repeating units in R^{F21} is same as the structure of each of the repeating units in R^{F11}; and
- R^{Si}: each independently is of the formula (S2), (S3) or (S4):

-C(Z¹-SiR²¹ₚ₁R²²_{q1})₂R^{e1} (S2)

-Si(Z¹-SiR²¹ₚ₁R²²_{q1} )₂R^{e1} (S3)

-N(Z¹-SiR²¹_{p1R}²²_{q1})₂ (S4)

Wherein Z¹, R²¹, R²², p1, and q1 are defined in formula (S11) and (S12); and
R^{e1} each independently is H, OH or a monovalent organic group,
provided that a case is excluded, where R^{Si} in compound (A) is of the formula (S12) and R^{Si} in compound (B) is of the formula (S3), and the structure or value of R^{f1}, R^{f2}, p, q, R^{F11}, X^{A}, α, β, γ, Z¹, R²¹, R²², p1, and q1 of compound (A) are completely same as the structure or value of R^{f1}, R^{f2}, p, q, R^{F21}, X^{A}, α, β, γ, Z¹, R²¹, R²², p1, and q1 of compound (B), respectively.

Also, the present invention provides the use of the present agent as an antifouling coating agent or a waterproof coating agent, and/or for vacuum deposition.

Furthermore, the present invention provides a pellet comprising the present agent.

Yet further, the present invention provides an article, which comprises a base material and, on a surface of the base material, a layer formed of the present agent.

Preferred embodiments of the invention are as defined in the appended dependent claims and/or in the following detailed description.

### Advantageous Effect of Invention

The present agent may contribute to form a surface-treating layer having good friction durability.

### Description of Embodiments

The term "monovalent organic group", as used herein, refers to a monovalent group containing a carbon. The monovalent organic group is not limited, and may be a hydrocarbon group or a derivative thereof. The derivative of hydrocarbon group refers to a group that has one or more of e.g. N, O, S, Si, amide, sulfonyl, siloxane, carbonyl, and carbonyloxy at the terminal or in the molecular chain of the hydrocarbon group. The term "organic group" refers to a monovalent organic group.

The term "di- to decavalent organic group" refers to a di- to decavalent group containing carbon. The di- to decavalent organic group may be, but is not limited to, a di- to decavalent group obtained by further removing 1-9 hydrogen atoms from an organic group. For example, the divalent organic group may be a divalent group obtained by further removing one hydrogen atom from an organic group.

The term "hydrocarbon group", as used herein, refers to a group that contains a carbon and a hydrogen and that is obtained by removing one hydrogen atom from a hydrocarbon. The hydrocarbon group is not limited, and examples include a C₁₋₂₀ hydrocarbon group optionally substituted with one or more substituents, such as an aliphatic hydrocarbon group and an aromatic hydrocarbon group. The "aliphatic hydrocarbon group" may be either straight, branched, or cyclic, and may be either saturated or unsaturated. The hydrocarbon group may contain one or more ring structures.

The substituent of the "hydrocarbon group", as used herein, is not limited, and examples include one or more groups selected from halogen, and C₁₋₆-alkyl, C₂₋₆-alkenyl, C₂₋₆-alkynyl, C₃₋₁₀-cycloalkyl, unsaturated C₃₋₁₀-cycloalkyl, 5- to 10-membered heterocyclyl, 5- to 10-membered unsaturated heterocyclyl, C₆₋₁₀-aryl, and 5- to 10-membered heteroaryl, each of which is optionally substituted with one or more halogen atoms.

The term "hydrolyzable group", as used herein, refers to a group which is able to undergo a hydrolysis reaction, i.e., represents a group that can be removed from the main backbone of a compound by a hydrolysis reaction. Examples of the hydrolyzable group include - OR^{h}, -OCOR^{h}, -O-N=CR^{h}₂, -NR^{h}₂, -NHR^{h}, and halogen (in these formulae, R^{h} is optionally substituted C₁₋₄-alkyl).

### (Surface-treating agent)

Hereinafter, a present agent will be described.

The present agent contains fluoropolyether group-containing silane compounds (A) and (B) (also referred to as "compound (A)" and "compound (B)" hereinafter). The compounds (A) and (B) are fluoropolyether-containing silane compounds offormula (1) or (2):

R^{F1}_{α}-X^{A}-R^{Si}_{β} (1)

R^{Si}γ-X^{A}-R^{F2}-X^{A}-R^{Si}_{γ} (2)

In formula (1), R^{F1} is each independently Rf¹-R^{F}-O_{q}-.

In the formula, Rf¹ is each independently C₁₋₁₆-alkyl optionally substituted with one or more F. Therein, the "C₁₋₁₆-alkyl " may be straight or branched, and is preferably straight or branched C₁₋₆-alkyl, in particular, C₁₋₃-alkyl group, more preferably straight-C₁₋₆ alkyl, in particular, C₁₋₃-alkyl.

Rf¹ is preferably C₁₋₁₆-alkyl substituted with one or more F, more preferably CF₂H-(C₁₋₁₅-perfluoroalkylene), and still more a C₁₋₁₆-perfluoroalkyl.

The C₁₋₁₆-perfluoroalkyl may be straight or branched, and is preferably straight or branched C₁₋₆-perfluoroalkyl, in particular C₁₋₃-perfluoroalkyl, more preferably straight C₁₋₆-perfluoroalkyl, in particular C₁₋₃-perfluoroalkyl, and specifically -CF₃, -CF₂CF₃, or - CF₂CF₂CF₃.

Preferably, Rf¹ in compound (A) described later has the same structure as Rf¹ in compound (B).

In formula (2), R^{F2} is -Rf²ₚ-R^{F}-O_{q}-.

In the formula, Rf² is C₁₋₆-alkylene optionally substituted with one or more F. Therein, the "C₁₋₆ alkylene " may be straight or branched, and is preferably straight or branched C₁₋₃-alkylene, more preferably straight C₁₋₃-alkylene.

Rf² is preferably C₁₋₆-alkylene group substituted with one or more F, more preferably C₁₋₆-perfluoroalkylene, and still more preferably C₁₋₃-perfluoroalkylene.

The C₁₋₆-perfluoroalkylene may be straight or branched, and is preferably straight or branched C₁₋₃-perfluoroalkylene, more preferably straight C₁₋₃-perfluoroalkyl, and specifically -CF₂-, -CF₂CF₂-, or - CF₂CF₂CF₂-.

Preferably, Rf² in compound (A) described later has the same structure as Rf² in compound (B).

In the formula, p is 0 or 1. In one embodiment, p is 0. In another embodiment, p is 1.

In the formula, q is each independently 0 or 1. In one embodiment, q is 0. In another embodiment, q is 1.

In the formulae (1) and (2), R^{F} is each independently a divalent fluoropolyether group.

In the formula (1), α is an integer of 1-9, and β is an integer of 1-9. These α and β may be varied in the valence number of X^{A}. The sum of α and β is equal to the valence number of X^{A}. For example, when X^{A} is a decavalent organic group, (α+β) = 10, and, for example, α is 9 and β is 1, α is 5 and β is 5, or α is 1 and β is 9. Further, when X^{A} is a divalent organic group, α and β is 1.

In the formula (2), y is an integer of 1-9. γ may be varied in the valence number of X^{A}. That is, y is a value obtained by subtracting 1 from the valence number of X^{A}.

In the formulae (1) and (2), X^{A} is interpreted as a linker, connecting a fluoropolyether moiety (R^{F1} and R^{F2}) which mainly provides water-repellency and surface lubricity, and the like, and a moiety (R^{Si}) providing binding ability to a base material. X^{A} may be a single bond or any organic group as long as the compounds represented by formulae (1) and (2) can stably exist.

X^{A} is each independently a single bond or a di- to decavalent organic group.

The structure of X^{A} in compound (A) described later may be same as the structure of X^{A} in compound (B).

In one embodiment, the structure of X^{A} in compound (A) is different from the structure of X^{A} in compound (B) .

The di- to decavalent organic group in X^{A} is preferably a di- to octavalent organic group. In one embodiment, the di- to decavalent organic group is preferably a di- to tetravalent organic group, and more preferably a divalent organic group. In another embodiment, the di- to decavalent organic group is preferably a tri- to octavalent organic group, and more preferably a tri- to hexavalent organic group.

In one embodiment, X^{A} is a single bond or a divalent organic group, α is 1, and β is 1.

In one embodiment, X^{A} is a single bond or a divalent organic group, and y is 1.

In one embodiment, X^{A} is a tri- to hexavalent organic group, α is 1, and β is 2-5.

In one embodiment, X^{A} is a tri- to hexavalent organic group, and y is 2-5.

In one embodiment, X^{A} is a trivalent organic group, α is 1, and β is 2.

In one embodiment, X^{A} is a trivalent organic group, and γ is 2.

When X^{A} is a single bond or a divalent organic group, formulae (1) and (2) are of the formulae (1') and (2').

R^{F1}-X^{A}-R^{Si} (1')

R^{Si}-X^{A}-R^{F2}-X^{A}-R^{Si} (2')

In one embodiment, X^{A} is a single bond.

In one embodiment, X^{A} is a divalent organic group.

In one embodiment, examples of X^{A} include a single bond or a divalent organic group of the formula:

-(R⁵¹)ₚ₅-(X⁵¹)_{q5}-

wherein
R⁵¹ is a single bond, -(CH₂)ₛ₅- or an o-, m-, or p-phenylene group, and is -(CH₂)ₛ₅- in one embodiment, and is a single bond in one embodiment.
s5 is an integer of 1-20, preferably 1-6, more preferably 1-3 and still further preferably 1 or 2,
X⁵¹ is -(X⁵²)₁₅-,
X⁵² each independently is a group selected from -O-, -S-, an o-, m- or p-phenylene group, -C(O)-, -C(O)O-, - Si(R⁵³)₂-, -(Si(R⁵³)₂O)ₘ₅-Si(R⁵³)₂-, -CONR⁵⁴-, -O-CONR⁵⁴-, - NR⁵⁴-, and -(CH₂)ₙ₅-, and for example, is a group selected from -CONR⁵⁴- and -O-CONR⁵⁴-, and in one embodiment, is a group selected from -O-, -C(O)-, -CONR⁵⁴-, and -O-CONR⁵⁴-,
R⁵³ each independently is phenyl, C₁₋₆-alkyl, or C₁₋₆-alkoxy, and is preferably phenyl or C₁₋₆-alkyl, and more preferably methyl,
R⁵⁴ each independently is H, phenyl or C₁₋₆-alkyl (preferably methyl),
m5 is each independently an integer of 1-100 and preferably 1-20,
n5 is each independently an integer of 1-20, preferably 1-6, and more preferably 1-3,
l5 is an integer of 1-10, preferably 1-5, and more preferably 1-3,
p5 is 0 or 1, and
q5 is 0 or 1,
provided that at least one of p5 and q5 is 1, and the order of the repeating units in parentheses with p5 or q5 is not limited.
X^{A} (typically, a hydrogen atom of X^{A}) herein is optionally substituted with one or more substituents selected from F, C₁₋₃-alkyl, and C₁₋₃-fluoroalkyl. In a preferred embodiment, X^{A} is not substituted by these groups.

In a preferred embodiment, X^{A} may each independently be

-(R⁵¹)ₚ₅-(X⁵¹)_{q5}-R⁵²-.

R⁵² is a single bond, -(CH₂)ₜ₅- or o-, m-, or p-phenylene, and is -(CH₂)ₜ₅- in one embodiment, and is a single bond in one embodiment. t5 is an integer of 1-20, preferably 2-6, and more preferably 2-3. X^{a} (typically, a hydrogen atom of X^{A}) herein is optionally substituted with one or more substituents selected from F, a C₁₋₃-alkyl, and C₁₋₃-fluoroalkyl. In a preferred embodiment, X^{A} is not substituted by these groups.

Preferably, X^{A} may each independently be
a single bond,
C₁₋₂₀-alkylene,
-R⁵¹-X⁵³-R⁵²-, or
-X⁵⁴-R⁵²-,
wherein R⁵¹ and R⁵² have the same meanings as above, and X⁵³ is
-O-,
-S-,
-C(O)-,
-C(O)O-,
-CONR⁵⁴-,
-O-CONR⁵⁴-,
-O-(CH₂)ᵤ₄-Co-,
-O-(CH₂)ᵤ₄-CONR⁵⁴-,
-Si (R⁵³)₂-,
- (Si (R⁵³)₂O)ₘ₅-Si(R⁵³)₂-,
-O-(CH2) ᵤ₅-(Si(R⁵³)₂O)ₘ₅-Si(R⁵³)₂-,
-O-(CH₂)ᵤ₅-Si(R⁵³)₂-O-Si(R⁵³)₂-CH₂CH₂-Sⁱ(R⁵³)₂-O-Si(R⁵³)₂-,
-O-(CH₂)ᵤ₅-Si(OCH₃)₂OSi(OCH₃)₂-,
-CONR⁵⁴-(CH₂)ᵤ₅-(Si(R⁵³)₂O)ₘ₅-Si(R53) ₂-,
-CONR⁵⁴-(CH₂)ₙ₅-N(R⁵⁴)-, or
-CONR⁵⁴-(o-, m- or p-phenylene)-Si (R⁵³)₂-,
wherein R⁵³, R⁵⁴ and m5 have the same meanings as above,
   u4 is an integer of 1-20, preferably 1-6, more preferably 1-3, for example 1; and u5 is an integer of 1-20, preferably 2-6, more preferably 2-3, and
   X⁵⁴ is
-S-,
-C(O)-,
-C(O)O-,
-CONR⁵⁴-,
-O-CONR⁵⁴-,
-O-(CH₂)ᵤ₄-CO-,
-O-(CH₂)ᵤ₄-CONR⁵⁴-,
-CONR⁵⁴-(CH₂)ᵤ₅-(Si (R⁵⁴)₂O)ₘ₅-Si(R⁵⁴)₂-,
-CONR⁵⁴-(CH₂)ᵤ₅-N(R⁵⁴)-, or
-CONR⁵⁴-(o-, m- or p-phenylene) -Si (R⁵⁴)₂-,
wherein each symbol has the same meaning as above.

In a preferred embodiment, X^{A} may each independently be
a single bond,
C₁₋₂₀-alkylene,
- (CH₂)ₛ₅-X⁵³-,
- (CH₂)ₛ₅-X⁵³-(CH₂)ₜ₅-
-X⁵⁴-, or
-X⁵⁴- (CH₂)ₜ₅-,
wherein
   X⁵³ is -O-, -C(O)-, -CONR⁵⁴-, -O-CONR⁵⁴-, -O-(CH₂)ᵤ₄-CO-, or -O-(CH₂)ᵤ₄CONR⁵⁴-, for example -CONR⁵⁴- or -O-CONR⁵⁴-, for example -O-, -C(O)-, -O-(CH₂)ᵤ₄-CO-, or -O-(CH₂)ᵤ₄-CONR⁵⁴-,
   R⁵⁴ each independently ais H, phenyl or C₁₋₆-alkyl, and preferably is H or methyl,
   u4 has the same meaning as above,
   s5 is an integer of 1-20,
   X⁵⁴ is -C(O)-, -C(O)O-, -CONR⁵⁴-, or -O-CONR⁵⁴-, and
   t5 is an integer of 1-20.

In one embodiment, X^{A} may each independently be C₁₋₂₀-alkylene,
- (CH₂)ₛ₅-X⁵³-,
- (CH₂)ₛ₅-X⁵³-(CH₂)ₜ₅-,
- X⁵⁴-, or
- X⁵⁴- (CH₂)ₜ₅-,
wherein
X⁵³ is -O-, -C(O)-, -CONR⁵⁴-, -O-CONR⁵⁴-, -O-(CH₂)ᵤ₄-CO-, or -O-(CH₂)ᵤ₄-CONR⁵⁴-, for example -CONR⁵⁴- or -O-CONR⁵⁴-, for example -O-, -C(O)-, -O-(CH₂)ᵤ₄-CO-, or -O-(CH₂)ᵤ₄-CONR⁵⁴-,
R⁵⁴ each independently is H, phenyl or C₁₋₆ alkyl, and preferably is H or methyl,
u4 has the same meaning as above,
s5 is an integer of 1-20,
X⁵⁴ is -C (O)-, -C (O)O-, -CONR⁵⁴-, or -O-CONR⁵⁴-, and
t5 is an integer of 1-20.

In a preferred embodiment, X^{A} may each independently be
a single bond,
C₁₋₂₀-alkylene,
-X⁵³-,
-X⁵³-(CH₂)ₜ₅-,
- (CH₂)ₛ₅-X⁵³-, or
- (CH₂)ₛ₅-X⁵³-(CH₂)ₜ₅-
wherein
   X⁵³ is -O-, -C(O)-, -CONR⁵⁴-, -O-CONR⁵⁴-, -O-(CH₂)ᵤ₄-CO-, or -O-(CH₂)ᵤ₄CONR⁵⁴-, for example -CONR⁵⁴- or -O-CONR⁵⁴-, for example -O-, -C(O)-, -O-(CH₂)ₙ₄-CO-, or -O-(CH₂)ᵤ₄-CONR⁵⁴-,
   R⁵⁴ each independently ais H, phenyl or C₁₋₆-alkyl, and preferably is H or methyl,
   u4 has the same meaning as above,
   s5 is an integer of 1-20, and
   t5 is an integer of 1-20.

In one embodiment, X^{A} may each independently be
a single bond,
-C(O)-,
C₁₋₂₀-alkylene,
-CONH- (CH₂)ₜ₅-,
- (CH₂)ₛ₅-O-(CH₂)ₜ₅-,
- (CH₂)ₛ₅-O-(CH₂)ₜ₅-CO-,
- (CH₂)ₛ₅-O-(CH₂)ₜ₅-CO-(CH₂)ₛ₅,
- (CH₂)ₛ₅-O-(CH₂)ₜ₅-CONH-,
- (CH₂)ₛ₅-O-(CH₂)ₜ₅-CONH-(CH₂)ₛ₅,
-(CH2) ₛ₅-(Si (R⁵³)₂O)ₘ₅-Si(R⁵³)₂-(CH₂)ₜ₅-,
- (CH₂)ₛ₅-O-(CH₂)ᵤ₅-(Si (R⁵³)₂O)ₘ₅-Si(R⁵³)₂-(CH₂)ₜ₅-, or
-(CH₂)ₛ₅-O-(CH₂)ₜ₅-Si(R⁵³)₂₋(CH₂)ᵤ₅-Si(R⁵³)₂-(CᵥH₂ᵥ)-,
wherein R⁵³, m5, s5, t5, and u5 have the same meanings as above, v is an integer of 1-20, preferably 2-6, and more preferably 2 or 3.

In the formula, -(CᵥH₂ᵥ)- may be straight or branched and may be, for example, -CH₂CH₂-, -CH₂CH₂CH₂-, -CH(CH₃)-, or -CH (CH₃)CH₂-.

X^{A} is each independently optionally substituted with one or more substituents selected from F, C₁₋₃-alkyl and C₁₋₃-fluoroalkyl (preferably, C₁₋₃-perfluoroalkyl). In one embodiment, X^{A} is unsubstituted.

The left side of each formula of XA is bonded to R^{F1} or R^{F2}, and the right side thereof is bonded to R^{Si}.

In one embodiment, X^{A} may each independently be a group that is different from an -O-C₁₋₆ alkylene group.

In another embodiment, examples of X^{A} include the following groups: 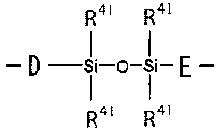 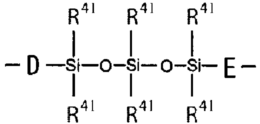 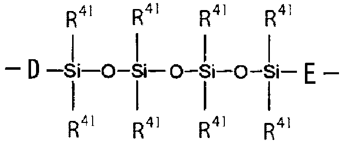 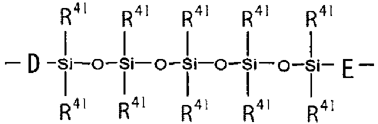 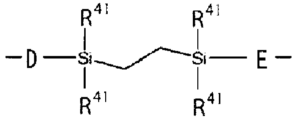 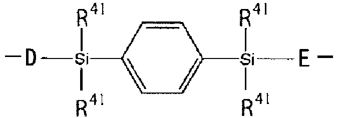 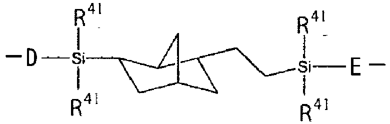
wherein R⁴¹ each independently is H, phenyl, C₁₋₆-alkyl or a C₁₋₆-alkoxy, and preferably methyl; and
   D is a group selected from
-CH₂O(CH₂)₂-,
-CH₂O(CH₂)₃-,
-CF₂O(CH₂)₃-,
- (CH₂)₂-,
- (CH₂)₃- ,
- (CH₂)₄-,
-CONH- (CH₂)₃-,
-CON (CH₃)- (CH₂)₃-, and
-CON(Ph)-(CH₂)₃- (wherein Ph means phenyl, and the same applies hereinafter) and
a group of the formula: 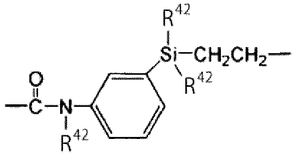
wherein R⁴² each independently is H, C₁₋₆-alkyl or C₁₋₆-alkoxy, preferably methyl or methoxy, and more preferably methyl,
   E is -(CH₂)ₙ- (n is an integer of 2-6); and
   D is bonded to the R^{F1} or R^{F2} of the molecular backbone and E is bonded to R^{Si}.

Specific examples of X^{A} include:
a single bond,
-CH₂OCH₂-,
-CH₂O(CH₂)₂-,
-CH₂O(CH₂)₃-,
-CH₂O(CH₂)₄-,
-CH₂O(CH₂)₅-,
-CH₂O(CH₂)₆-,
-CH₂O(CH₂)₃Si(CH₃)₂OSi(CH₃)₂(CH₂)₂-,
-CH₂O(CH₂)₃Si(CH₃)₂OSi(CH₃)₂OSi(CH₃)₂(CH₂)₂-,
-CH₂O(CH₂)₃Si(CH₃)₂O(Si(CH₃)₂O)₂Si(CH₃)₂(CH₂)₂-,
-CH₂O(CH₂)₃Si(CH₃)₂O(Si(CH₃)₂O)₃Si(CH₃)₂(CH₂)₂-,
-CH₂O(CH₂)₃Si(CH₃)₂O(Si(CH₃)₂O)₁₀Si(CH₃)₂(CH₂)₂-,
-CH₂O(CH₂)₃Si(CH₃)₂O(Si(CH₃)₂O)₂₀Si(CH₃)₂(CH₂)₂-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-
-CH₂OCF₂CHFOCF₂CF₂CF₂-C(O)NH-CH₂-,
-CH₂OCH₂(CH₂)₇CH₂Si(OCH₃)₂OSi(OCH₃)₂(CH₂)₂Si(OCH₃)₂OSi(OCH₃)₂-(CH₂)₂-,
-CH₂OCH₂CH₂CH₂Si(OCH₃)₂₀Si(OCH₃)₂(CH₂)₃-,
-CH₂OCH₂CH₂CH₂Si(OCH₂CH₃)₂OSi(OCH₂CH₃)₂(CH₂)₃-,
-CH₂OCH₂CH₂CH₂Si(OCH₃)₂₀Si(OCH₃)₂(CH₂)₂-,
-CH₂OCH₂CH₂CH₂Si(OCH₂CH₃)₂OSi(OCH₂CH₃)₂(CH₂)₂-,
-(CH₂)₂-Si(CH₃)₂-(CH₂)₂-,
-CH₂-,
- (CH₂)₂-,
- (CH₂)₃-,
-(CH₂)₄-,
-(CH₂)₅-,
-(CH₂)₆-,
-CH₂O-CH₂-CO-,
-CH₂O-CH₂-CO-CH₂-,
-CH₂O-CH₂-CO-(CH₂)₂-,
-CO-,
-CONH-,
-CONH-CH₂-,
-CONH-(CH₂)₂-,
-CONH-(CH₂)₃-,
-CONH-(CH₂)₄-,
-CONH-(CH₂)₅-,
-CONH-(CH₂)₆-,
-CON(CH₃)-(CH₂),
-CON(CH₃)-(CH₂)₂-,
-CON(CH₃)-(CH₂)₃-,
-CON(CH₃)-(CH₂)₄-,
-CON(CH₃)-(CH₂)₅-,
-CON(CH₃)-(CH₂)₆-,
-CON (Ph) -(CH₂)-,
-CON (Ph) -(CH₂)₂-,
-CON (Ph) -(CH₂)₃-,
-CON (Ph) -(CH₂)₄-,
-CON (Ph) -(CH₂)₅-,
-CON (Ph) -(CH₂)₆-,
-CONH-(CH₂)NH(CH₂)₃-,
-CONH-(CH₂)₂NH(CH₂)₃-,
-CONH-(CH₂)₃NH(CH₂)₃-,
-CONH-(CH₂)₄NH(CH₂)₃-,
-CONH-(CH₂)₅NH(CH₂)₃-,
-CONH-(CH₂)₆NH(CH₂)₃-,
-CH₂₀-CH₂-CONH-CH₂-,
-CH₂₀-CH₂-CONH-(CH₂)₂-,
-CH₂₀-CONH-(CH₂)-,
-CH₂O-CONH-(CH₂)₂-,
-CH₂O-CONH-(CH₂)₃-,
-CH₂O-CONH-(CH₂)₄-,
-CH₂O-CONH-(CH₂)₅-,
-CH₂O-CONH-(CH₂)₆-,
-S-(CH₂)₃-,
-(CH₂)₂S(CH₂)₃-,
-CONH-(CH₂)₃Si(CH₃)₂OSi(CH₃)₂(CH₂)₂-,
-CONH-(CH₂)₃Si(CH₃)₂OSi(CH₃)₂OSi(CH₃)₂(CH₂)₂-,
-CONH-(CH₂)₃Si(CH₃)₂O(Si(CH₃)₂O)₂Si(CH₃)₂(CH₂)₂-,
-CONH-(CH₂)₃Si(CH₃)₂O(Si(CH₃)₂O)₃Si(CH₃)₂(CH₂)₂-,
-CONH-(CH₂)₃Si(CH₃)₂O(Si(CH₃)₂O)₁₀Si(CH₃)₂(CH₂)₂-,
-CONH-(CH₂)₃Si(CH₃)₂O(Si(CH₃)₂O)₂₀Si(CH₃)₂(CH₂)₂-,
-C(O)O-(CH₂)-,
-C(O)O-(CH₂)₂-,
-C(O)O-(CH₂)₃-,
-C(O)O-(CH₂)₄-,
-C(O)O-(CH₂)₅-,
-C(O)O-(CH₂)₆-,
-CH₂-O-(CH₂)₃-Si(CH₃)₂-(CH₂)₂-Si(CH₃)₂-(CH₂)₂-,
-CH₂-O-(CH₂)₃-Si(CH₃)₂-(CH₂)₂-Si(CH₃)₂-CH(CH₃)-,
-CH₂-O-(CH₂)₃-Si(CH₃)₂-(CH₂)₂-Si(CH₃)₂-(CH₂)₃-,
-CH₂-O-(CH₂)₃-Si(CH₃)₂-(CH₂)₂-Si(CH₃)₂-CH(CH₃)-CH₂-,
-OCH₂-,
-O(CH₂)₂-,
-O(CH₂)₃-,
-OCFHCF₂-,
and 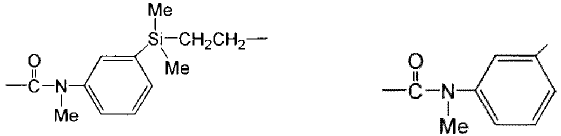 ,

In another embodiment, X^{A} is each independently a group of the formula -(R¹⁶)ₓ₁-(CFR¹⁷)ₓ₂-(CH₂)ₓ₃-. In the formula, x1, x2, and x3 are each independently an integer of 0-10, (x1+x2+x3) is ≥ 1, and the order of the repeating units in parentheses is not limited.

In the formula, R¹⁶ is each independently O, phenylene, carbazolylene, -NR¹⁸- (wherein R¹⁸ is H or an organic group), or a divalent organic group. Preferably, R¹⁶ is O or a divalent polar group.

Examples of the "divalent polar group" include - C(O)-, -C(=NR¹⁹)- and -C(O)NR¹⁹- (wherein R¹⁹ is H or lower alkyl). The "lower alkyl group" is, for example, C₁₋₆-alkyl, such as methyl, ethyl, and n-propyl, which is optionally substituted with one or more F.

In the formulae, R¹⁷ is each independently H, F, or lower fluoroalkyl, and is preferably F. The "lower fluoroalkyl group" is, for example, C₁₋₆-fluoroalkyl and preferably C₁₋₃-fluoroalkyl, preferably C₁₋₃-perfluoroalkyl, more preferably trifluoromethyl or pentafluoroethyl, and still more preferably trifluoromethyl.

In the formulae (1) and (2), R^{Si} is each independently a group having a Si atom bonded to a hydrolyzable group.

### (Fluoropolyether group-containing silane compound (A))

The fluoropolyether-containing silane compound (A) is a compound of formula (1) or (2),
wherein R^{F1} is Rf¹-R^{F}-O_{q}-;
R^{F2} is -Rf²ₚ-R^{F}-O_{q}-;
R^{F} is a fluoropolyether group R^{F11}; and
R^{Si} is each independently of the formula (S11) or (S12):

   -C(Z¹-SiR²¹ₚ₁R²²_{q1})₃ (S11)

   -Si(Z¹-SiR²¹ₚ₁R²²_{q1})₃ (S12)
For example, the compound (A) is a compound of formula (A1), (A2), (A3), or (A4):

R^{F1}_{α}-X^{A}(C(Z¹-SiR²¹ₚ₁R²²_{q1})₃)_{β} (A1)

((R²²_{q1}R²¹ₚ₁Si-Z¹)₃C)_{γ}X^{A}-R^{F2}-X^{A}(C(Z¹-SiR²¹ₚ₁R²²_{q1})₃ (A2)

R^{F1}_{α}-X^{A}(Si(Z¹-SiR²¹ₚ₁R²²_{q1})₃)_{β} (A3)

((R²²_{q1}R²¹ₚ₁Si -Z¹)₃Si)_{γ}X^{A}-R^{F2}-X^{A} (Si(Z¹- SiR²¹ₚ₁R²²_{q1})₃)_{γ} (A4)

Hereinafter, unless otherwise specified, the description of the formula (1) or (2) can be applied to formulae (A1), (A2), (A3), and (A4). Specifically, R^{f1}, R^{f2}, p, q, X^{A}, α, β, and γ have the same meaning as above.

In compound (A), R^{F11} is a fluoropolyether group of the formula:

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

In the formula:
R^{Fa} is each independently H, F or Cl, and
a-f each independently are an integer of 0-200, with (a+b+c+d+e+f) ≥ 1, and the order of the repeating units in parentheses is not limited.

R^{Fa} is preferably H or F, and more preferably F.

Preferably, a-f are each independently an integer of 0-100.

(a+b+c+d+e+f) is preferably ≥ 5, and more preferably ≥ 10, and may be, for example, 15 or ≥ 20. (a+b+c+d+e+f) is preferably ≤ 200, more preferably ≤ 100, and still more preferably ≤ 60, and may be, for example, ≤ 50 or ≤ 30.

These repeating units may be linear or branched, and are preferably linear. For example, -(OC₆F₁₂)- may be - (OCF₂CF₂CF₂CF₂CF₂CF₂)-, -(OCF(CF₃)CF₂CF₂CF₂CF₂)-, - (OCF₂CF(CF₃)CF₂CF₂CF₂)-, -(OCF₂CF₂CF(CF₃)CF₂CF₂)-, - (OCF₂CF₂CF₂CF(CF₃)CF₂)-, or -(OCF₂CF₂CF₂CF₂CF(CF₃))-, and is preferably -(OCF₂CF₂CF₂CF₂CF₂CF₂)-. -(OC₅F₁₀)- may be, for example, -(OCF₂CF₂CF₂CF₂CF₂)-, -(OCF(CF₃)CF₂CF₂CF₂)-, - (OCF₂CF(CF₃)CF₂CF₂)-, -(OCF₂CF₂CF(CF₃)CF₂)-, or - (OCF₂CF₂CF₂CF(CF₃))-, and is preferably - (OCF₂CF₂CF₂CF₂CF₂)-. -(OC₄F₈)- may be any of - (OCF₂CF₂CF₂CF₂)-, -(OCF(CF₃)CF₂CF₂)-, -(OCF₂CF(CF₃)CF₂)-, - (OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)-, and -(OCF₂CF(C₂F₅))-, and is preferably -(OCF₂CF₂CF₂CF₂)-. -(OC₃F₆)- (that is, in the formula, R^{Fa} is F) may be any of -(OCF₂CF₂CF₂)-, - (OCF(CF₃)CF₂)-, and -(OCF₂CF(CF₃))-, and is preferably - (OCF₂CF₂CF₂)-. -(OC₂F₄)- may be any of -(OCF₂CF₂)- and - (OCF(CF₃))-, and is preferably -(OCF₂CF₂)-.

In one embodiment, R^{F11} is each independently a group of the formula (f1), (f2), (f3), (f4), or (f5):

-(OC₃F₆)_{d}- (f1)

wherein d is an integer of 1 to 200;

- (OC₄F₈)_{c}-(OC₃F₆)_{d}-(OC₂F₄)ₑ-(OCF₂)_{f}- f2)

wherein c and d each independently are an integer of 0-30, and e and f each independently are an integer of 1-200; with 10 ≤ (c+d+e+f) ≤ 200; and the order of the repeating units in parentheses is not limited;

-(R⁶-R⁷)_{g}- (f3)

wherein R⁶ is OCF₂ or OC₂F₄; R⁷ is OC₂F₄, OC₃F₆, OC₄F₈, OC₅F₁₀, OC₆F₁₂ or a combination of two or three groups selected from these groups; and g is an integer of 2-100;

- (OC₆F₁₂)ₐ-(OC₅F₁₀)_{b}-(OC₄F₈)_{c}-(OC₃F₆)_{d}-(OC₂F₄)ₑ-(OCF₂)_{f}- (f4)

wherein e is an integer of 1-200, and a-d and f each independently are an integer of 0-200, with (a+b+c++d+e+f) ≥ 1, and the order of the repeating units in parentheses is not limited; and

- (OC₆F₁₂)ₐ-(OC₅F₁₀)_{b}-(OC₄F₈)_{c}-(OC₃F₆)_{d}-(OC₂F₄)ₑ-(OCF₂)_{f}- (f5)

wherein f is an integer of 1-200, and a-e each independently are an integer of 0-200, with (a+b+c+d+e+f) ≥ 1, and the order of the repeating units in parentheses is not limited.

In formula (f1), d is preferably 5-200, more preferably 10-100, and still more preferably 15-50, and is, for example, an integer of 25-35. Formula (f1) is preferably a group represented by -(OCF₂CF₂CF₂)_{d}- or - (OCF(CF₃)CF₂)_{d}-, and more preferably a group represented by -(OCF₂CF₂CF₂)_{d}-.

In formula (f2), e and f are each independently an integer of preferably 5-200, and more preferably 10-200. (c+d+e+f) is preferably ≥ 5, and more preferably ≥ 10, and may be, for example, ≥ 15 or ≥ 20. In one embodiment, formula (f2) is preferably a group represented by -(OCF₂CF₂CF₂CF₂)_{c}-(OCF₂CF₂CF₂)_{d}-(OCF₂CF₂)ₑ-(OCF₂)_{f}-. In another embodiment, formula (f2) may be a group represented by -(OC₂F₄)ₑ-(OCF₂)_{f}-.

In formula (f3), R⁶ is preferably OC₂F₄. In formula (f3), R⁷ is preferably a group selected from OC₂F₄, OC₃F₆, and OC₄F₈, or a combination of two or three groups independently selected from these groups, and more preferably a group selected from OC₃F₆ and OC₄F₈. Examples of the combination of two or three groups independently selected from OC₂F₄, OC₃F₆, and OC₄F₈ include, but are not limited to, -OC₂F₄OC₃F₆-, - OC₂F₄OC₄F₈-, -OC₃F₆OC₂F₄-, -OC₃F₆OC₃F₆-, -OC₃F₆OC₄F₈-, - OC₄F₈OC₄F₈-, -OC₄F₈OC₃F₆-, -OC₄F₈OC₂F₄-, -OC₂F₄OC₂F₄OC₃F₆-, - OC₂F₄OC₂F₄OC₄F₈-, -OC₂F₄OC₃F₆OC₂F₄-, -OC₂F₄OC₃F₆OC₃F₆-, - OC₂F₄OC₄F₈OC₂F₄-, -OC₃F₆OC₂F₄OC₂F₄-, -OC₃F₆OC₂F₄OC₃F₆-, - OC₃F₆OC₃F₆OC₂F₄-, and -OC₄F₈OC₂F₄OC₂F₄-. In formula (f3), g is an integer of preferably ≥ 3, and more preferably ≥ 5. g is preferably an integer of ≤ 50. In formula (f3), OC₂F₄, OC₃F₆, OC₄F₈, OC₅F₁₀, and OC₆F₁₂ may be either linear or branched, and are preferably linear. In this embodiment, the formula (f3) is preferably -(OC₂F₄-OC₃F₆)_{g}- or -(OC₂F₄-OC₄F₈)_{g}-.

In formula (f4), e is an integer of preferably 1-100, and more preferably 5-100. (a+b+c+d+e+f) is preferably ≥ 5, and more preferably ≥ 10, and is, for example, 10-100.

In formula (f5), f is an integer of preferably 1-100, and more preferably 5-100. (a+b+c+d+e+f) is preferably ≥ 5, and more preferably ≥ 10, and is, for example, 10-100.

In R^{F11}, the ratio of e to f (hereinafter, referred to as an "e/f ratio") is 0.1-10, preferably 0.2-5, more preferably 0.2-2, still more preferably 0.2-1.5. With an e/f ratio of ≤ 10, the lubricity, friction durability, and chemical resistance (such as durability against (human) sweat) of a surface-treating layer obtained from the compound are further increased. The smaller the e/f ratio is, the higher the lubricity and the friction durability of the surface-treating layer are. On the other hand, with an e/f ratio of ≥ 0.1, the stability of the compound can be further increased. The larger the e/f ratio is, the more improved the stability of the compound is.

In one embodiment, the e/f ratio is preferably 0.2-0.9, more preferably 0.2-0.85, and still more preferably 0.2-0.8.

In one embodiment, from the viewpoint of heat resistance, the above e/f ratio is preferably ≥ 0.9, and more preferably 0.9-1.5.

In the compound (A), the number-average molecular weights of the R^{F1} and R^{F2} moieties are not limited, and are each, for example, 500-30,000, preferably 1,500-30,000, and more preferably 2,000-10,000. Herein, the number-average molecular weights of R^{F1} and R^{F2} are each defined as a value obtained by ¹⁹F-NMR measurement.

In another embodiment, in the compound (A), the number-average molecular weights of the R^{F1} and R^{F2} moieties are each 500-30,000, preferably 1,000-20,000, more preferably 2,000-15,000, and still more preferably 2,000-10,000, and may be, for example, 3,000-8,000.

In the compound (A), R^{Si} is each independently of the formula (S11) or (S12).

-C(Z¹-SiR²¹ₚ₁R²²_{q1})₃ (S11)

- Si(Z¹-SiR²¹ₚ₁R²²_{q1})₃ (S12)

In one embodiment, in compound (A), R^{Si} is a group of formula (S11).

In one embodiment, in compound (A), R^{Si} is a group of formula (S12).

In the formulae (S11) and (S12), Z¹ is each independently C₁₋₆-alkylene, -(CH₂)_{z1}-O-(CH₂)_{z2}- or -(CH₂)_{z3}-phenylene-(CH₂)_{z4}-, wherein z1 is an integer of 1-6, and z2-z4 each independently are an integer of 0-6, for example 1-6.

The right side of the structure described as Z¹ is bonded to (SiR²¹ₚ₁R²²_{q1}).

The C₁₋₆-alkylene group may be straight or branched, and is preferably straight.

In a preferred embodiment, Z¹ is C₁₋₆-alkylene grup or -(CH₂)_{z3}-phenylene-(CH₂)_{z4}-, and preferably -phenylene-(CH₂)_{z4}-. When Z¹ is such a group, light resistance, in particular ultraviolet resistance, can be further enhanced. Preferably, z3 is an integer of 0-6 and z4 is an integer of 1-6.

In another preferred embodiment, Z¹ is C₁₋₃-alkylene. In one embodiment, Z¹ may be -CH₂CH₂CH₂-. In another embodiment, Z¹ may be -CH₂CH₂-.

In formulae (S11) and (S12), R²¹ is each independently OH or a hydrolyzable group, preferably a hydrolyzable group.

In formulae (S11) and (S12), R²² is each independently H or a monovalent organic group. Such a monovalent organic group is a monovalent organic group excluding the above hydrolyzable group.

In R²², the monovalent organic group is preferably C₁₋₂₀-alkyl, more preferably C₁₋₆-alkyl, and still more preferably methyl.

In formulae (S11) and (S12), p1 is each independently an integer of 1-3, and q1 is each independently an integer of 0-2. In the unit of (SiR²¹ₚ₁R²²_{q1}), (p1+q1) = 3.

p1 is preferably 2 or 3, and still more preferably 3. That is, in each (Z¹-SiR²¹ₚ₁R²²_{q1}), there is at least one R²¹.

In one embodiment, compound (A) is of formula (1).

In one embodiment, compound (A) is of formula (2).

### (Fluoropolyether group-containing silane compound (B))

The fluoropolyether-containing silane compound (B) is a compound of formula (1) or (2):
wherein R^{F1} is Rf¹-R^{F}-O_{q}-;
R^{F2} is -Rf²ₚ-R^{F}-O_{q}-;
R^{F} is a fluoropolyether group represented by R^{F21}; and
R^{Si} is each independently of formula (S2), (S3), or (S4):

   -C(Z¹-SiR²¹ₚ₁R²²_{q1})₂R^{e1} (S2)

   - Si(Z¹-SiR²¹ₚ₁R²²_{q1})₂R^{e1} (S3)

   -N(Z¹-SiR²¹ₚ₁R²²_{q1})₂ (S4)
For example, the compound (B) is of the formula (B11), (B21), (B12), (B22), (B13), or (B23).

R^{F1}_{α}-X^{A}(C(Z¹-SiR²¹ₚ₁R²²_{q1})₂R^{e1})_{β} (B11)

(R^{e1}(R²²_{q1}R²¹ₚ₁Si-Z¹)₂C)_{γ}X^{A}-R^{F2}-X^{A}(C(Z¹-SiR²¹ₚ₁R²²_{q1})₂R^{e1})_{γ} (B21)

R^{F1}_{α}-X^{A} (Si(Z¹-SiR²¹ₚ₁R²²_{q1})₂R^{e1})_{β} (B12)

(R^{e1}(R²²_{q1}R²¹ₚ₁Si -Z¹)₂Si)_{γ}X^{A}-R^{F2}-X^{A}(Si(Z¹-SiR²¹ₚ₁R²²_{q1})₂R^{e1})_{γ} (B22)

R^{F1}_{α}-X^{A}(N(Z¹-SiR²¹ₚ₁R²²_{q1})₂)_{β} (B13)

((R²²_{q1}R²¹ₚ₁Si-Z-)₂N)_{γ}X^{A} -R^{F2}-X^{A}(N(Z¹-SiR²¹ₚ₁R²²_{q1})₂)_{γ} (B23)

Hereinafter, unless otherwise specified, the description of the formula (1) or (2) thereof can be applied to formulae (B11), (B21), (B12), (B22), (B13), and (B23). Specifically, R^{f1}, R^{f2}, p, q, X^{A}, α, β, and γ have the same meaning as above.

In compound (B), R^{F21} is a fluoropolyether group of the formula:

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

In the formula, a-f, and R^{Fa} have the same meaning as the symbols in the formulae (S11) and (S12).

In the formula, the structure of each of the repeating units in R^{F21} is same as the structure of each of the repeating units in R^{F11}. Here, "the structure of each of the repeating units is same" means that each of the repeating units in R^{F11} and the each of repeating units in R^{F21} have the same structure, and the combination of the repeating units in R^{F11} and the combination of the repeating units in R^{F21} are the same. a in R^{F11} may be the same as a in R^{F21} or different from a in R^{F21}; b in R^{F11} may be the same as b in R^{F21} or different from b in R^{F21}; c in R^{F11} may be the same as c in R^{F21} or different from c in R^{F21}; d in R^{F11} may be the same as d in R^{F21} or different from d in R^{F21}; e in R^{F11} may be the same as e in R^{F21} or different from e in R^{F21}; and f in R^{F11} may be the same as f in R^{F21} or different from f in R^{F21}.

The structure of each of the repeating units in R^{F21} is the same as the structure of each of the repeating units in R^{F11}, which is explained in detail below.

The repeating unit -(OC₆F₁₂)- in R^{F21} has the same structure as the repeating unit -(OC₆F₁₂)- in R^{F11}. The repeating unit -(OC₅F₁₀)- in R^{F21} has the same structure as the repeating unit -(OC₅F₁₀)- in R^{F11}. The repeating unit -(OC₄F₈)- in R^{F21} has the same structure as the repeating unit -(OC₄F₈)- in R^{F11}. The repeating unit -(OC₃F₆)- in R^{F21} has the same structure as the repeating unit - (OC₃F₆)- in R^{F11}. The repeating unit -(OC₂F₄)- in R^{F21} has the same structure as the repeating unit -(OC₂F₄)- in R^{F11}.

For example, when the repeating unit -(OC₃F₆)- in R^{F11} is represented by -(OCF₂CF₂CF₂)-, the repeating unit - (OC₃F₆)- in R^{F21} is represented by - (OCF₂CF₂CF₂)-; when the repeating unit -(OC₃F₆)- in R^{F11} is represented by - (OCF (C₃)CF₂)-, the repeating unit -(OC₃F₆)- in R^{F21} is represented by -(OCF(CF₃)CF₂)-; and when the repeating unit -(OC₃F₆)- in R^{F11} is represented by - (OC₂CF(CF₃))-, the repeating unit -(OC₃F₆)- in R^{F21} is represented by - (OCF₂CF(CF₃))-. When the repeating unit -(OC₂F₄)- in R^{F11} is represented by -(OCF₂CF₂)-, the repeating unit - (OC₂F₄)- in R^{F21} is represented by -(OCF₂CF₂)-; and when the repeating unit -(OC₂F₄)- in R^{F11} is represented by - (OCF(CF₃))-, the repeating unit -(OC₂F₄)- in R^{F21} is represented by -(OCF(CF₃))-.

The combination of repeating units in R^{F11} is the same as the combination of repeating units in R^{F21}, which is explained in detail below.

For example, when R^{F11} has the repeating unit - (OC₃F₆)-, R^{F21} has the repeating unit -(OC₃F₆)-; when R^{F11} has the repeating units -(OC₃F₆)- and -(OC₂F₄)-, R^{F21} has the repeating units -(OC₃F₆)- and -(OC₂F₄)-; and when R^{F11} has the repeating units -(OC₂F₄)- and -(OCF₂)-, R^{F21} has the repeating units -(OC₂F₄)- and -(OCF₂)-.

Preferably, each values of a-f in R^{F11} are same as each values of a-f in R^{F21}, respectively. Here, "each values of a-f are the same" means that the ratio of the value in R^{F11} to the value in R^{F21}, that is, "the value in R^{F21}"/"the value in R^{F11}" is between 0.9 and 1.1, specifically, between 0.95 and 1.05. The above "the value in R^{F21}"/"the value in R^{F11}" specifically means "the value of a in R^{F21}"/"the value of a in R^{F11}", "the value of b in R^{F21}"/"the value of b in R^{F11}", "the value of c in R^{F21}"/"the value of c in R^{F11}", "the value of d in R^{F21}"/"the value of d in R^{F11}", "the value of e in R^{F21}"/"the value of e in R^{f11}", and "the value of f in R^{F21}"/"the value of f in R^{F11}".

Preferably, when R^{F11} is each independently of the formula (f1), R^{F21} is represented by formula (f1'); when R^{F11} is represented by formula (f2), R^{F21} is represented by formula (f2'); when R^{F11} is represented by formula (f3), R^{F21} is represented by formula (f3'); when R^{F11} is represented by formula (f4), R^{F21} is represented by formula (f4'); and when R^{F11} is represented by formula (f4), R^{F21} is represented by formula (f5'). When R^{F21} is of the formula (f1'), (f2'), (f3'), (f4'), or (f5'), each repeating unit is a repeating unit of the same type as the repeating unit of formula (f1), (f2), (f3), (f4), or (f5):

-(OC₃F₆)_{d}- (f1')

wherein d is an integer of 1-200;

- (OC₄F₈)_{c}-(OC₃F₆)_{d}-(OC₂F₄)ₑ-(OCF₂)_{f}- (f2')

wherein c and d are each independently an integer of 0-30, and e and f are each independently an integer of 1-200;
(c+d+e+f) is ≥ 2; and
the order of the repeating units in parentheses with the subscript c, d, e, or f is not limited;

   -(R⁶-R⁷)_{g}- (f3')

   wherein R⁶ is OCF₂ or OC₂F₄;
R⁷ is a group selected from OC₂F₄, OC₃F₆, OC₄F₈, OC₅F₁₀, and OC₆F₁₂, or a combination of two or three groups independently selected from these groups; and
g is an integer of 2-100;

   - (OC₆F₁₂)ₐ-(OC₅F₁₀)_{b}-(OC₄F₆)_{c}-(OC₃F₆)_{d}-(OC₂F₄)ₑ-(OCF₂)_{f}- (f4')

   wherein e is an integer of 1-200, a-d, and f are each independently an integer of 0-200, (a+b+c+d+e+f) is ≥ 1, and the order of the repeating units in parentheses with a, b, c, d, e, or f is not limited; and

   - (OC₆F₁₂)ₐ-(OC₅F₁₀)_{b}-(OC₄F₈)_{c}-(OC₃F₆)_{d}-(OC₂F₄)ₑ-(OCF₂)_{f}- (f5')

   wherein f is an integer of 1-200, a-e are each independently an integer of 0-200, (a+b+c+d+e+f) is ≥ 1, and the order of the repeating units in parentheses with a, b, c, d, e, or f is not limited.

In R^{F21}, the e/f ratio is 0.1-10, preferably 0.2-5, more preferably 0.2-2, and still more preferably 0.2-1.5.

In one embodiment, the e/f ratio of R^{F21} is preferably 0.2-0.9, more preferably 0.2-0.85, and still more preferably 0.2-0.8.

In one embodiment, from the viewpoint of heat resistance, the e/f ratio of R^{F21} is preferably ≥ 0.9, and more preferably 0.9-1.5.

In one embodiment, the e/f ratio in R^{F21} is the same as the e/f ratio in R^{F11}. Here, having the same e/f ratio means that the ratio of the e/f ratio of R^{F21} to the e/f ratio of R^{F11}, that is, "the e/f ratio of R^{F21}"/"the e/f ratio of R^{F11}" is 0.9-1.1, specifically, 0.95-1.05.

In one embodiment, the e/f ratio in R^{F21} is different from the e/f ratio in R^{F11}. Here, having different e/f ratio means that the ratio of the e/f ratio of R^{F21} to the e/f ratio of R^{F11}, that is, "the e/f ratio of R^{F21}"/"the e/f ratio of R^{F11}" is < 0.9 or > 1.1, for example, ≤ 0.87, ≤ 0.86, ≥ 1.3, or ≥ 1.5.

In one embodiment, the e/f ratio of R^{F11} and R^{F21} is preferably 0.2-0.9, more preferably 0.2-0.85, and still more preferably 0.2-0.8.

In one embodiment, from the viewpoint of heat resistance, the e/f ratio of R^{F11} and R^{F21} is preferably ≥ 0.9, and more preferably 0.9-1.5.

In compound (B), the number-average molecular weights ("Mn" hereinafter) of the R^{F1} and R^{F2} moieties are not limited, and are each, for example, 500-30,000, preferably 1,500-30,000, and more preferably 2,000-10,000. Herein, the Mn of R^{F1} and R^{F2} are each defined as a value obtained by ¹⁹F-NMR measurement.

In another embodiment, in compound (B), the Mn of the R⁷¹ and R^{F2} moieties are each 500-30,000, preferably 1,000-20,000, more preferably 2,000-15,000, and still more preferably 2,000-10,000, and may be, for example, 3,000-8,000.

The Mn of R^{F21} is preferably the same as the Mn of R^{F11}. Here, having the same Mn means that the ratio of the Mn of R^{F21} to the Mn of R^{F11}, that is, "Mn of R^{F21}"/"Mn of R^{F11}" is 0.9-1.1, specifically, 0.95-1.05.

In one embodiment, the Mn of R^{F21} is different value from the Mnof R^{F11}. For example, the ratio of the Mn of R^{F21} to the Mn of R^{F11}, that is, "the Mn of R^{F21}"/"the Mn of R^{F11}" may be < 0.9 or > 1.1.

The Mn of R^{F1} in compound (B) is preferably the same as the Mn of R^{F1} in compound (A); and the Mn of R^{F2} in compound (B) is preferably the same as the Mn of R^{F2} in compound (A). Here, having the same Mn means that the ratio of the Mn of compound (B) to the Mn of the compound (A), that is, "Mn of compound (B)"/"Mn of compound (A)", is 0.9 and 1.1, specifically 0.95 and 1.05.

In another embodiment, the Mn of R^{F1} and R^{F2} in the compounds (A) and (B) are preferably in the range of 500-30,000, more preferably 1,500-30,000, and still more preferably 2,000-10,000.

In one embodiment, in the compounds (A) and (B), the Mn of the R^{F1} and R^{F2} moieties are each 500-30,000, preferably 1,000-20,000, more preferably 2,000-15,000, and still more preferably 2,000-10,000, and may be, for example, 3,000-8,000.

Preferably, the Mn of R^{F21} in compound (B) is same as the Mn of R^{F11} in the compound (A); and the e/f value in compound (B) is the same as the e/f value in compound (A) .

In one embodiment,
R^{F11} is each independently of the following (f1), (f2), (f3), (f4), or (f5);
when R^{F11} is of formula (f1), R^{F21} is of formula (f1');
when R^{F11} is of formula (f2), R^{F21} is of formula (f2');
when R^{F11} is of formula (f3), R^{F21} is of formula (f3');
when R^{F11} is of formula (f4), R^{F21} is of formula (f4');
when R^{F11} is of formula (f5), R^{F21} is of formula (f5');
the Mn of R^{F21} in compound (B) is same as the Mn of R^{F11} in compound (A); and
the e/f value in compound (B) is the same as the e/f value in compound (A).

In one embodiment,
R^{F11} is each independently of the following formula (f1), (f2), (f3), (f4), or (f5);
when R^{F11} is of formula (f1), R^{F21} is of formula (f1');
when R^{F11} is of formula (f2), R^{F21} is of formula (f2');
when R^{F11} is of formula (f3), R^{F21} is of formula (f3');
when R^{F11} is of formula (f4), R^{F21} is of formula (f4');
when R^{F11} is of formula (f5), R^{F21} is of formula (f5'); and
the e/f value in compound (B) is different from the e/f value in compound (A).

Z¹, R²¹, R²², p1, and q1 in formulae (S2), (S3), and (S4) have the same meaning as Z¹, R²¹, R²², p1, and q1 in formulae (S11) and (S12), respectively.

In formula (S1), R^{e1} is each independently H, OH or a monovalent organic group.

R^{e1} is a structure excluding a group (Z¹-SiR²¹ₚ₁R²²_{q1}).

In one embodiment, R^{e1} is OH.

In one embodiment, R^{e1} is a monovalent organic group.

In R^{e1}, the monovalent organic group is preferably C₁₋₂₀-alkyl, more preferably C₁₋₆-alkyl, and still more preferably methyl.

By using the compound (B) having such a structure, steric hindrance can be reduced when it is used to bond to a base material. On the other hand, in the compound (A) described above, steric hindrance can be increased when it is used to bond to the base material. This means that the combination of the compounds (A) and (B) can provide particularly good bonding with the base material and form tight-lattice siloxane three-dimensional crosslinks.

In one embodiment, R^{e1} is a monovalent organic group and has a structure excluding a group -O-(SiR²¹ₚ₁R²²_{q1}).

In one embodiment, R^{e1} is -O-(SiR²¹ₚ₁R²²_{q1}).

In one embodiment, X^{A} is a single bond; and R^{e1} is a monovalent organic group and is -(ORⁿ¹)ₙ₁₁ORⁿ². Rⁿ¹ is C₂₋₄-alkylene, which may be straight or branched. Rⁿ¹ is, for example, ethylene. n11 is an integer of 1-10, for example, 2. Rⁿ² is H or C₁₋₄-alkyl, for example, methyl. In the present embodiment, R^{e1} may include, for example, -(OCH₂CH₂)ₙ₁₁OCH₃, -(OCH₂CH(CH₃))ₙ₁₁OCH₃, - (OCH₂CH₂CH₂CH₂)ₙ₁₁OCH₃.

In one embodiment, in compound (B), R^{Si} is a group of formula (S2).

In one embodiment, in compound (B), R^{Si} is a group of formula (S3).

In one embodiment, in compound (B), R^{Si} is a group of formula (S4).

In one embodiment, compound (B) is of formula (1).

In one embodiment, compound (B) is of formula (2).

In present agent, a case is excluded, where R^{Si} in compound (A) is of formula (S12) and R^{Si} in compound (B) is of formula (S3), and the structure or the value of R^{f1}, R^{f2}, p, q, R^{F11}, X^{A}, α, β, γ, Z¹, R²¹, R²², p1, and q1 of compound (A) are completely same as the structure or the value of these groups of compound (B), respectively. That is, when R^{Si} in compound (A) is of formula (S12) and R^{Si} in compound (B) is of formula (S3), at least one of R^{f1}, R^{f2}, p, q, R^{F11}, X^{A}, α, β, γ, Z¹, R²¹, R²², p1, and q1 of compound (A) has a different structure or value from the corresponding group of compound (B).

Here, "R^{F11} of compound (A) has a different structure from R^{F21} of compound (B)" means, specifically, at least one of the case where the value of a in R^{F11} and the value of a in R^{F21} is different, the value of b in R^{F11} and the value of b in R^{F21} is different, the value of c in R^{F11} and the value of c in R^{F21} is different, the value of d in R^{F11} and the value of d in R^{F21} is different, the value of f in R^{F11} and the value of f in R^{F21} is different. R^{F11} of compound (A) and R^{F21} of compound (B) have the same type of repeating units.

In one embodiment, when compound (A) is of formula (1) and R^{Si} is of formula (S12), and compound (B) is of formula (1) and R^{Si} is of formula (S3), at least one of R^{f1}, q, R^{F11}, X^{A}, α, β, γ, and Z¹ of the fluoropolyether group-containing silane compound (A) has a different structure or a different value from the corresponding group of compound (B).

In one embodiment, when compound (A) is of formula (2) and R^{Si} is of formula (S12), and compound (B) is of formula (2) and R^{Si} is of formula (S3), at least one of R^{f2}, p, q, R^{F11}, X^{A}, α, β, γ, and Z¹ of compound (A) has a different structure or a different value from the corresponding group of compound (B).

In one embodiment, when R^{Si} in the fluoropolyether group-containing silane compound (A) is of formula (S12) and R^{Si} in the fluoropolyether group-containing silane compound (B) is of formula (S3), at least one of R^{f1}, R^{f2}, p, q, R^{F11}, X^{A}, α, β, γ, and Z¹ of compound (A) has a different structure or a different value from the corresponding group of compound (B).

In one embodiment, when R^{Si} in compound (A) is of formula (S12) and R^{Si} in compound (B) is of formula (S3), at least one of R^{F11} and X² of compound (A) has a different structure from R^{F21} and X^{A} of compound (B).

In one embodiment, R^{Si} in compound (A) is of formula (S11), and R^{Si} in compound (B) is of formula (S2), (S3), or (S4).

In one embodiment, R^{Si} in compound (A) is of formula (S11), and R^{Si} in compound (B) is of formula (S2).

In one embodiment, R^{Si} in compound (A) is of formula (S11), and R^{Si} in compound (B) is of formula (S3).

In one embodiment, R^{Si} in compound (A) is of formula (S11), and R^{Si} in compound (B) is of formula (S4).

In one embodiment, R^{Si} in compound (A) is of formula (S12), and R^{Si} in compound (B) is of formula (S2).

In one embodiment, R^{Si} in compound (A) is of formula (S12), and R^{Si} in compound (B) is of formula (S3). In the present embodiment, a case is excluded, where the structure or the value of R^{f1}, R^{f2}, p, q, R^{F11}, X^{A}, α, β, γ, Z¹, R²¹, R²², p1, and q1 of compound (A) are completely same as in these group of compound (B), respectively.

In one embodiment, R^{Si} in compound (A) is of formula (S12), and R^{Si} in compound (B) is of formula (S4).

In one embodiment, the compounds (A) and (B) are both of formula (1).

In one embodiment, the compounds (A) and (B) are both of formula (2).

In one embodiment, the compounds (A) and (B) are both of formula (1), and R^{Si} in compound (A) is a group of formula (S11).

In one embodiment, the compounds (A) and (B) are both of formula (2), and R^{Si} in compound (A) is a group of formula (S11).

In one embodiment, the compounds (A) and (B) are both of formula (1), and R^{Si} in compound (B) is a group of formula (S2).

In one embodiment, the compounds (A) and (B) are both of formula (1), and R^{Si} in compound (B) is a group of formula (S3).

In one embodiment, the compounds (A) and (B) are both of formula (1), and R^{Si} in compound (B) is a group of formula (S4).

In one embodiment, the compounds (A) and (B) are both of formula (1); R^{Si} in compound (A) is a group of formula (S12); and R^{Si} in compound (B) is a group of formula (S2) or (S4).

In one embodiment, the compounds (A) and (B) are both of formula (2); R^{Si} in compound (A) is a group of formula (S12); and R^{Si} in compound (B) is a group of formula (S2) or (S4).

In the compounds (A) and (B), p1 is preferably 2 or 3, and more preferably 3.

The present agent contains the compound (A) and the compound (B). With such a configuration, the present agent can provide a surface-treating layer having water-repellency, oil-repellency, antifouling properties (e.g., preventing grime such as fingerprints from adhering), waterproof properties (preventing water from entering electronic components and the like), surface lubricity (or lubricity, for example, such as removability by wiping of grim such as fingerprints, and excellent tactile sensations to the fingers), friction durability, transparency, and the like, which may be suitably used as a functional thin film.

In the compound (A) contained in the present agent, three groups represented by (Z¹-SiR²¹ₚ₁R²²_{q1}) are bonded to a C atom or Si atom, wherein the C atom or Si atom is the branching point. In compound (A) with the above structure, tight-lattice siloxane three-dimensional crosslinks may not be formed when it is used to bond to a base material.

On the other hand, in the compound (B), two groups represented by (Z¹-SiR²¹ₚ₁R²²_{q1}) are bonded to a C atom, a Si atom, or N atom, wherein the C atom, Si atom or N atom is the branching point. By using the compound (B) with such a structure together with the compound (A), a tight-lattice siloxane three-dimensional crosslink can be formed.

Further, in the present agent, R^{F11} of compound (A) and R^{F21} of compound (B) have the same type of repeating units. Thus, it is considered that the miscibility between the compounds (A) and (B) is increased. As a result, the compounds (A) and (B) can be easily mixed, and for example, both compounds can be mixed at any proportion.

Therefore, when the present agent is used, it is possible to form a surface-treating layer which is particularly excellent in water-repellency, oil-repellency, and friction durability. In particular, it is possible to form a surface-treating layer which is particularly excellent in water-repellency, oil-repellency, and friction durability, as compared with the case of using a surface-treating agent containing only a fluoropolyether group-containing silane compound (A) or (B) .

The compound (A) is preferably contained in an amount of ≥ 5 mass%, more preferably ≥ 10 mass%, still more preferably ≥ 20 mass%, and may be contained in an amount of ≥ 40 mass%, ≥ 60 mass%, 65 mass%, ≥ 70 mass% based on the total amount of the compound (A) and the compound (B); and is preferably contained in an amount of ≤ 95 mass%, more preferably ≤ 90 mass%, still more preferably ≤ 85 mass%, and may be contained in an amount of ≤ 80 mass%. When the compound (A) is contained in such a content, a condensation reaction in which a silane coupling group is hydrolyzed to form a siloxane bond is promoted, and a dense network is formed in a three dimensional direction, thereby improving friction durability.

The compound (A) may be contained in an amount of 5-95 mass%, 10-90 mass%, 20-90 mass%, 40-90 mass%, 60-90 mass%, or 70-90 mass% based on the total amount of the compounds (A) and (B).

In one embodiment, the compound (A) may be contained in an amount of 65-95 mass% based on the total amount of the compounds (A) and (B).

The compound of formula (1) or (2) can be obtained, for example, by the method described in JP-A-2017-082194 or JP-A-2008-297275.

In the present agent, the content of the compound of formula (2) is preferably 0.1-35 mol% based on the total of the compounds of formulae (1) and (2). The lower limit of the content of the compound of formula (2) based on the total of the compounds of formulae (1) and (2) may preferably be 0.1 mol%, more preferably 0.2 mol%, still more preferably 0.5 mol%, further preferably 1 mol%, particularly preferably 2 mol%, and especially 5 mol%. The upper limit of the content of the compound of formula (2) based on the total of the compounds of formulae (1) and (2) may preferably be 35 mol%, more preferably 30 mol%, still more preferably 20 mol%, further preferably 15 mol% or 10 mol%. The compound of formula (2) based on the total of the compound of formulae (1) and (2)is preferably 0.1-30 mol%, more preferably 0.1-20 mol%, still more preferably 0.2-10 mol%, further more preferably 0.5-10 mol%, and particularly preferably 1-10 mol%, for example, 2-10 mol%, or 5-10 mol%. By using the compound of formula (2) in such a range, the frictional durability of the formed surface-treating layer can be further improved.

### (Other Compounds)

The present agent may further contain a solvent, a (unreactive) fluoropolyether compound that can be understood as a fluorine-containing oil, preferably a perfluoro(poly)ether compound (hereinafter, collectively referred to as a "fluorine-containing oil"), a (unreactive) silicone compound that can be understood as a silicone oil (hereinafter, referred to as a "silicone oil"), a catalyst, a surfactant, a polymerization inhibitor, and a sensitizer.

Examples of the above solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide and N,N-dimethylacetamide; ether alcohols such as methyl cellosolve, cellosolve, isopropyl cellosolve, butyl cellosolve, and diethylene glycol monomethyl ether; diethylene glycol monoethyl ether acetate; and fluorine-containing solvents such as 1,1,2-trichloro-1,2,2-trifluoroethane, 1,2-dichloro-1,1,2,2-tetrafluoroethane, dimethyl sulfoxide, 1,1-dichloro-1,2,2,3,3-pentafluoropropane (HCFC 225), Zeorora H, HFE 7100, HFE 7200, and HFE 7300. Alternatively, the solvent may be a mixed solvent of two or more of such solvents.

Examples of the fluorine-containing oil include a compound (perfluoro(poly)ether compound) of formula (3):

Rf⁵-(OC₄F₈)_{a'}-(OC₃F₆)_{b'}-(OC₂F₄)_{c'}-(OCF₂)_{d'}-Rf⁶ ... (3)

wherein Rf⁵ is C₁₋₁₆-alkyl optionally substituted with one or more F (preferably, C₁₋₁₆-perfluoroalkyl), Rf⁶ is H, F or C₁₋₁₆-alkyl optionally substituted with one or more F (preferably, C₁₋₁₆-perfluoroalkyl), and Rf⁵ and Rf⁶ are each independently, more preferably, C₁₋₃-perfluoroalkyl;
a', b', c' and d' represent the respective four numbers of repeating units in perfluoro(poly)ether constituting a main backbone of the polymer and are mutually independently an integer of 0-300, (a'+b'+c'+d') is ≥ 1, preferably 1-300, more preferably 20-300; the order of the repeating units in parentheses with the subscript a', b', c' or d' is not limited; among such repeating units, for example, -(OC₄F₈)- may be any of - (OCF₂CF₂CF₂CF₂)-, -(OCF(CF₃)CF₂CF₂)-, -(OCF₂CF(CF₃)CF₂)-, - (OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)- and -(OCF₂CF(C₂F₅))- and is preferably -(OCF₂CF₂CF₂CF₂)-; - (OC₃F₆)- may be any of -(OCF₂CF₂CF₂)-, -(OCF(CF₃)CF₂)- and -(OCF₂CF(CF₃))- and is preferably -(OCF₂CF₂CF₂)-; and -(OC₂F₄)- may be any of -(OCF₂CF₂)- and -(OCF(CF₃))- and is preferably - (OCF₂CF₂)-.

Examples of the perfluoro(poly)ether compound of formula (3) include a compound of any of the formulae (3a) and (3b) (which may be used singly or as a mixture of two or more):

Rf⁵-(OCF₂CF₂CF₂)_{b"}-Rf⁶ ... (3a)

Rf⁵-(OCF₂CF₂CF₂CF₂)_{a"}-(OCF₂CF₂CF₂)_{b''}-(OCF₂CF₂)_{c"}-(OCF₂)_{d"}-Rf⁶ ... (3b)

In these formulae, Rf⁵ and Rf⁶ are as described above; in formula (3a), b'' is an integer of 1-100; and in formula (3b), a'' and b'' are each independently an integer of 0-30, and c'' and d'' are each independently an integer of 1-300. The order of the repeating units in parentheses with the subscript a'', b'', c'', or d'' is not limited.

From another viewpoint, the fluorine-containing oil may be a compound of the formula Rf³-F wherein Rf³ is C₅₋₁₆-perfluoroalkyl. The fluorine-containing oil may be a chlorotrifluoroethylene oligomer.

The fluorine-containing oil may have an average molecular weight of 500-10,000. The molecular weight of the fluorine-containing oil may be measured using GPC.

The fluorine-containing oil may be contained in an amount of, for example, 0-50 mass%, preferably 0-30 mass%, and more preferably 0-5 mass% based on the present composition (for example, surface-treating agent). In one embodiment, the present composition is substantially free from the fluorine-containing oil. Being substantially free from the fluorine-containing oil means that the fluorine-containing oil is not contained at all, or an extremely small amount of the fluorine-containing oil may be contained.

The fluorine-containing oil contributes to increasing the surface lubricity of a layer formed of the present agent.

For example, the silicone oil may be a linear or cyclic silicone oil having ≤ 2,000 siloxane bonds. The linear silicone oil may be so-called a straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, or alcohol. Examples of the cyclic silicone oil include cyclic dimethylsiloxane oil.

In the present agent, such a silicone oil may be contained in an amount of, for example, 0-300 parts by mass (pbm), and preferably 50-200 pbm, based on total 100 pbm of the above present fluoropolyether group-containing silane compound (in the case of two or more kinds, the total thereof, and the same applies below).

The silicone oil contributes to increasing the surface lubricity of the surface-treating layer.

Examples of the above catalyst include an acid (for example, acetic acid, trifluoroacetic acid), a base (for example, ammonia, triethylamine, diethylamine) and a transition metal (for example, Ti, Ni, Sn).

The catalyst promotes hydrolysis and dehydrative condensation of the present fluoropolyether group-containing silane compound, and promotes formation of a layer formed of the present agent.

Examples of the other components include, in addition to those described above, tetraethoxysilane, methyltrimethoxysilane, 3-aminopropyltrimethoxysilane, 3-glycidoxypropyltrimethoxysilane, and methyltriacetoxysilane.

The composition of the present disclosure can be used as a surface-treating agent for surface treatment of a base material.

The present agent can be formed into pellets by impregnating a porous material such as a porous ceramic material or a metal fiber such as a fiber obtained by, for example, solidifying steel wool in a cotton-like form with the composition. Such pellets can be used in, for example, vacuum deposition.

### (Article)

Hereinafter, an article of the present invention ("the present article") will be described.

The present article comprises a base material and a layer on a surface of the base material formed of the present agent (surface-treating layer).

The base material that can be used in the present disclosure may be composed of any suitable material such as glass, a resin (which may be a natural or synthetic resin, for example, a common plastic material, and may be in the form of e.g. a plate, or a film), a metal, ceramics, a semiconductor (such as silicon and germanium), a fiber (such as woven fabric and nonwoven fabric), fur, leather, a wood material, a ceramic material, a stone material, or a building material.

For example, when the article to be produced is an optical member, the material constituting the surface of the base material may be a material for an optical member, such as glass or a transparent plastic. When the article to be produced is an optical member, some layer (or film) such as a hard coat layer or an antireflection layer may be formed on the surface (the outermost layer) of the base material. The antireflection layer may be any of a single-layer antireflection layer and a multi-layer antireflection layer. Examples of inorganic substances that can be used in the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, and WO₃. One of these inorganic substances may be used singly, or two or more may be used in combination (for example, as a mixture). In the case of a multi-layer antireflection layer, SiO₂ and/or SiO is preferably used in the outermost layer thereof. When the article to be produced is an optical glass component for a touch panel, a part of the surface of the base material (glass) may have a transparent electrode such as a thin film in which e.g. indium tin oxide (ITO) or indium zinc oxide is used. The base material, according to its specific configuration, may have, for example, an insulating layer, an adhesive layer, a protecting layer, a decorated frame layer (ICON), an atomizing film layer, a hard coating layer, a polarizing film, a phase difference film, or a liquid crystal display module.

The shape of the base material is not limited. The surface region of the base material on which a surface-treating layer is to be formed may be at least a part of the base material surface, and may be suitably determined according to the application, specific specifications, and the like of an article to be produced.

The base material, or at least the surface portion thereof, may be composed of a material originally having a hydroxyl group. Examples of the material include glass as well as metal (in particular, base metal) wherein a natural oxidized film or a thermal oxidized film is formed on the surface, ceramics, semiconductors, and the like. Alternatively, when the base material has an insufficient amount of a hydroxyl group or when the base material originally does not have a hydroxyl group as in resin and the like, a pre-treatment may be performed on the base material to thereby introduce or increase a hydroxyl group on the surface of the base material. Examples of such a pre-treatment include a plasma treatment (for example, corona discharge) and ion beam irradiation. The plasma treatment can be suitably utilized to not only introduce or increase a hydroxyl group on the surface of the base material, but also clean the surface of the base material (remove foreign matter). Another example of such a pre-treatment includes a method wherein a monolayer of a surface adsorbent having a carbon-carbon unsaturated bonding group is formed on the surface of the base material by a LB method (a Langmuir-Blodgett method), or a chemical adsorption method beforehand, and thereafter cleaving the unsaturated bond under an atmosphere containing e.g. oxygen or nitrogen.

Alternatively, the base material, or at least a surface portion thereof, may be composed of a silicone compound having one or more other reactive groups such as a Si-H group, or a material containing alkoxysilane.

Then, on the surface of such a base material, a layer of the above present agent is formed, this layer is post-treated as necessary, and thereby a layer is formed from the present agent.

The layer of the present agent can be formed by applying the above composition on the surface of the base material such that the composition coats the surface. The coating method is not limited. For example, a wet coating method and a dry coating method can be used.

Examples of the wet coating method include dip coating, spin coating, flow coating, spray coating, roll coating, and gravure coating.

Examples of the dry coating method include deposition (usually, vacuum deposition), sputtering, and CVD. Specific examples of the deposition method (usually, vacuum deposition method) include resistive heating, high-frequency heating using electron beam or microwave, and ion beam. Specific examples of the CVD method include plasma-CVD, optical CVD, and thermal CVD.

Furthermore, coating by an atmospheric pressure plasma method can be performed.

When using the wet coating method, the present agent can be applied to the surface of the base material after being diluted with a solvent. From the viewpoint of the stability of the present agent and the volatility of solvents, the following solvents are preferably used: perfluoroaliphatic hydrocarbons having 5-12 carbon atoms (such as perfluorohexane, perfluoromethylcyclohexane, and perfluoro-1,3-dimethylcyclohexane); polyfluoroaromatic hydrocarbons (such as bis(trifluoromethyl)benzene); polyfluoroaliphatic hydrocarbons (such as C₆F₁₃CH₂CH₃ (such as Asahiklin (R) AC-6000 manufactured by Asahi Glass Co., Ltd.), and 1,1,2,2,3,3,4-heptafluorocyclopentane (such as Zeorora (R) H manufactured by Zeon Corporation)); alkyl perfluoroalkyl ethers (the perfluoroalkyl group and the alkyl group may be linear or branched) such as hydrofluoroether (HFE) (such as perfluoropropylmethyl ether (C₃F₇OCH₃) (such as Novec (trademark) 7000 manufactured by Sumitomo 3M Limited), perfluorobutyl methyl ether (C₄F₉OCH₃) (such as Novec (trademark) 7100 manufactured by Sumitomo 3M Limited), perfluorobutyl ethyl ether (C₄F₉OC₂H₅) (such as Novec (trademark) 7200 manufactured by Sumitomo 3M Limited), and perfluorohexyl methyl ether (C₂F₅CF(OCH₃)C₃F₇) (such as Novec (trademark) 7300 manufactured by Sumitomo 3M Limited), or CF₃CH₂OCF₂CHF₂ (such as Asahiklin (R) AE-3000 manufactured by Asahi Glass Co., Ltd.)). These solvents may be used alone or as a mixture prepared by mixing two or more thereof in combination. In particular, hydrofluoroether is preferable, and perfluorobutyl methyl ether (C₄F₉OCH₃) and/or perfluorobutyl ethyl ether (C₄F₉OC₂H₅) is particularly preferable.

When using the dry coating method, the present agent may be directly subjected to the dry coating method, or may be diluted with the above solvent before being subjected to the dry coating method.

A layer of the surface-treating agent is preferably formed such that the present agent coexists in the layer with a catalyst for hydrolysis and dehydrative condensation. Conveniently, in the case of a wet coating method, the present agent is diluted with a solvent, and then, immediately before application to the surface of the base material, a catalyst may be added to the diluent of the present agent. In the case of a dry coating method, the present agent to which a catalyst has been added is directly used to a deposition (usually vacuum deposition) treatment, or a pellet-like material may be used to a deposition (usually vacuum deposition) treatment, wherein the pellets is obtained by impregnating a porous body of metal such as iron or copper with the present agent to which the catalyst has been added.

The catalyst may be any suitable acid or base. The acid catalyst may be, for example, acetic acid, formic acid, or trifluoroacetic acid. The base catalyst may be, for example, ammonia or organic amine.

In the above-described manner, a layer derived from the present agent is formed on the surface of the base material, and the present article is produced. The layer thus obtained has both high surface lubricity and high friction durability. The above layer may have not only high friction durability but also have, depending on the compositional features of the surface-treating agent used, water-repellency, oil-repellency, antifouling property (for example, preventing fouling such as fingerprints from adhering), waterproof property (e.g. preventing water from penetrating into electronic components), surface lubricity (or lubricity, such as wiping property for fouling including fingerprints and excellent tactile sensations to the fingers), and may be suitably utilized as a functional thin film.

That is to say, the present disclosure further relates to an optical material having a cured product of the present agent in the outermost layer.

The optical material preferably includes a wide variety of optical materials in addition to optical materials relating to displays as exemplified below: for example, displays such as cathode ray tubes (CRTs; e.g., PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The present article may be, but is not limited to, an optical member. Examples of the optical member include lenses of glasses; front surface protective plates, antireflection plates, polarizing plates, and anti-glare plates for displays such as PDPs and LCDs; touch panel sheets for devices such as mobile phones and personal digital assistants; disc surfaces of optical discs such as Blu-ray (R) discs, DVD discs, CD-Rs, and MOs; optical fibers; and display surfaces of watches and clocks.

The present article may be medical equipment or a medical material.

Further, the present article may be an interior or exterior of an automobile, such as a headlight cover, a side mirror, a side window, an interior decorative film, a center console, a meter panel, and a camera lens cover.

The thickness of the above layer is not limited. The thickness of the layer in the case of an optical member is in the range of 1-50 nm, 1-30 nm, and preferably 1-15 nm, from the viewpoint of optical performance, surface lubricity, friction durability, and antifouling properties.

The article obtained by using the present agent has been described in detail above. The application and the method for using the present agent, and the method for producing an article, are not limited to those exemplified above.

### Examples

Hereinafter, the present disclosure will be described by way of Examples. In the Examples, all chemical formulae shown below indicate average compositional features, and the order of repeating units (such as (OCF₂CF₂CF₂CF₂), (OCF₂CF₂CF₂), (OCF₂CF₂), and (OCF₂)) constituting perfluoropolyether is not limited. Hereinafter, "Me" represents CH₃.

The following compounds were prepared as the fluoropolyether group-containing compound. 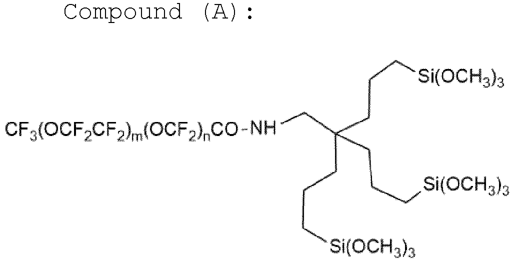 (m ≈ 21, n ≈ 35)
(the average composition included 0.27 repeating units of (OCF₂CF₂CF₂CF₂) and 0.42 repeating units of (OCF₂CF₂CF₂), but these were omitted due to their small amount. Further, a compound (A') having -C(CH₂CH₂CH₂Si(OCH₃)₃)₃ at both ends was contained in an amount of 3.2 mol% based on the total of the compounds (A) and (A').) 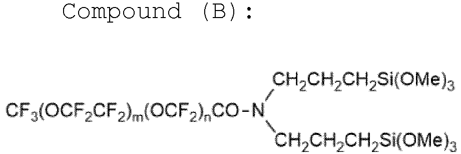 (m ≈ 21, n ≈ 35)
(the average composition included 0.30 repeating units of (OCF₂CF₂CF₂CF₂) and 0.44 repeating units of (OCF₂CF₂CF₂), but these were omitted due to their small amount. Further, a compound (B') having -N(CH₂CH₂CH₂Si(OCH₃)₃)₂ at both ends was contained in an amount of 3.0 mol% based on the total of the compounds (B) and (B').) 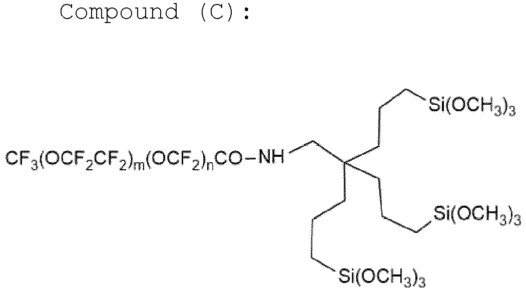 (m ≈ 26, n ≈ 24)
(the average composition included 1.23 repeating units of (OCF₂CF₂CF₂CF₂) and 0.65 repeating units of (OCF₂CF₂CF₂), but these were omitted due to their small amount. Further, a compound (C') having -C(CH₂CH₂CH₂Si(OCH₃)₃)₃ at both ends was contained in an amount of 7.9 mol% based on the total of the compounds (C) and (C').) 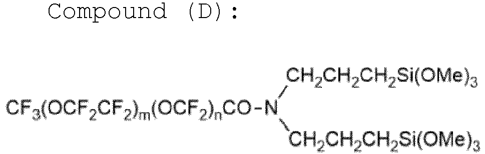 (m ≈ 26, n ≈ 24)
(the average composition included 1.35 repeating units of (OCF₂CF₂CF₂CF₂) and 0.69 repeating units of (OCF₂CF₂CF₂), but these were omitted due to their small amount. Further, a compound (D') having -N(CH₂CH₂CH₂Si(OCH₃)₃)₂ at both ends was contained in an amount of 8.1 mol% based on the total of the compounds (D) and (D').) 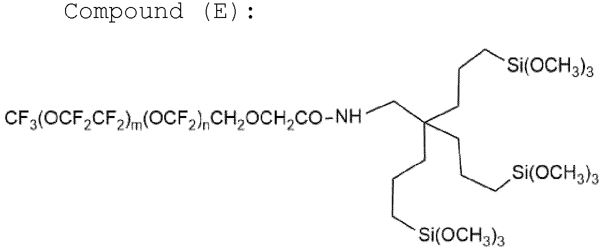 (m ≈ 21, n ≈ 35)
(the average composition included 0.31 repeating units of (OCF₂CF₂CF₂CF₂) and 0.44 repeating units of (OCF₂CF₂CF₂), but these were omitted due to their small amount. Further, a compound (E') having -C(CH₂CH₂CH₂Si(OCH₃)₃)₃ at both ends was contained in an amount of 3.8 mol% based on the total of the compounds (E) and (E').) 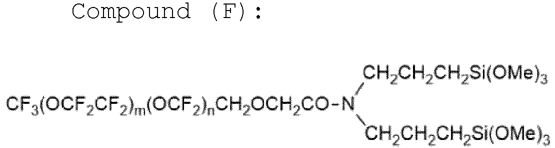 (m ≈ 21, n ≈ 35)
(the average composition included 0.34 repeating units of (OCF₂CF₂CF₂CF₂) and 0.40 repeating units of (OCF₂CF₂CF₂), but these were omitted due to their small amount. Further, a compound (F') having -N(CH₂CH₂CH₂Si(OCH₃)₃)₂ at both ends was contained in an amount of 3.9 mol% based on the total of the compounds (F) and (F').) 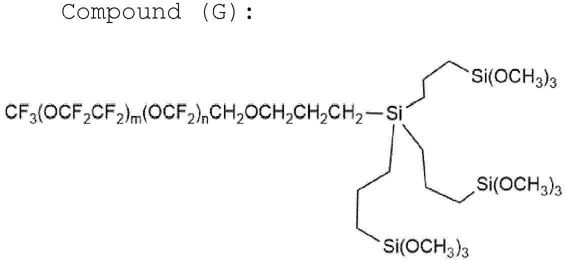 (m ≈ 26, n ≈ 24)
(the average composition included 1.32 repeating units of (OCF₂CF₂CF₂CF₂) and 0.70 repeating units of (OCF₂CF₂CF₂), but these were omitted due to their small amount. Further, a compound (G') having -Si(CH₂CH₂CH₂Si(OCH₃)₃)₃ at both ends was contained in an amount of 8.0 mol% based on the total of the compounds (G) and (G').) 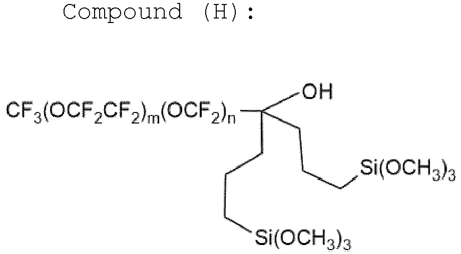 (m ≈ 26, n ≈ 28)
(the average composition included 1.22 repeating units of (OCF₂CF₂CF₂CF₂) and 1.76 repeating units of (OCF₂CF₂CF₂), but these were omitted due to their small amount. Further, a compound (H') having -C(OH) (CH₂CH₂CH₂Si(OCH₃)₃)₂ at both ends was contained in an amount of 6.5 mol% based on the total of the compounds (H) and (H').) 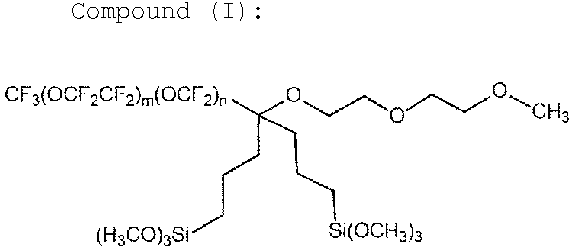 (m ≈ 26, n ≈ 28)
(the average composition included 2.21 repeating units of (OCF₂CF₂CF₂CF₂) and 2.53 repeating units of (OCF₂CF₂CF₂), but these were omitted due to their small amount. Further, a compound (I') having - C[(OCH₂CH₂)₂CH₃](CH₂CH₂CH₂Si(OCH₃)₃)₂ at both ends was contained in an amount of 6.2 mol% based on the total of the compounds (I) and (I').) 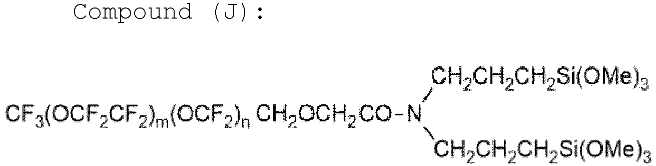 (m ≈ 35, n ≈ 33)
(the average composition included 1.25 repeating units of (OCF₂CF₂CF₂CF₂) and 2.03 repeating units of (OCF₂CF₂CF₂), but these were omitted due to their small amount. Further, a compound (J') having -N(CH₂CH₂CH₂Si(OCH₃)₃)₂ at both ends was contained in an amount of 7.8 mol% based on the total of the compounds (J) and (J').)

Compound (K): CF₃(OCF₂CF₂)ₘ(OCF₂)ₙCH₂OCH₂CH₂CH₂Si(OMe)₃

(m ≈ 26, n ≈ 28)
(the average composition included 1.20 repeating units of (OCF₂CF₂CF₂CF₂) and 1.75 repeating units of (OCF₂CF₂CF₂). Further, a compound (K') having Si(OCH₃)₃ at both ends was contained in an amount of 4.8 mol% based on the total of the compounds (K) and (K').)

The compound (A) was dissolved in hydrofluoroether (Novec HFE-7200, manufactured by 3M) such that the solid concentration was 0.1% by mass to prepare a diluent (1).

In the same manner, the compounds (B), (C), (D), (E), (F), (G) and (I) were used to prepare the diluents (2)-(8), respectively.

The compound (A) was dissolved in hydrofluoroether (Novec HFE-7200, manufactured by 3M) such that the solid concentration was 20.0% by mass to prepare a diluent (9).

In the same manner, the compounds (G), (H), (J) and (K were used to prepare the diluents (10)-(13), respectively.

### (Preparation of surface-treating agent)

The diluents (1)-(8) were mixed at the proportion shown in Table 1 below to prepare surface-treating agent 1-12. Surface-treating agents 1-4 are Examples, and surface-treating agents 5-12 are Comparative Examples.

**[Table 1]**

| Surface-treating agent | Diluent (1) | Diluent (2) | Diluent (3) | Diluent (4) | Diluent (5) | Diluent (6) | Diluent (7) | Diluent (8) |
|---|---|---|---|---|---|---|---|---|
| 1 | 80 | 20 | | | | | | |
| 2 | | | 80 | 20 | | | | |
| 3 | | | | | 50 | 50 | | |
| 4 | | | | | | | 50 | 50 |
| 5 | 100 | | | | | | | |
| 6 | | 100 | | | | | | |
| 7 | | | 100 | | | | | |
| 8 | | | | 100 | | | | |
| 9 | | | | | 100 | | | |
| 10 | | | | | | 100 | | |
| 11 | | | | | | | 100 | |
| 12 | | | | | | | | 100 |

### (Formation of surface-treating layer)

Surface-treating agents 1-12 were applied to a chemically tempered glass ("Gorilla" glass, manufactured by Corning Incorporated, thickness 0.7 mm) using a spin coater.

The spin coating conditions were 300 rpm for 3 seconds and 2,000 rpm for 30 seconds.

The coated glass was heated at 150°C for 30 minutes in a thermostatic oven in air to form a cured film.

### (Evaluation of surface-treating layer properties)

The properties of the surface-treating layers obtained by using the surface-treating agents 1-12 were evaluated as follows. The results are shown in Table 2.

### <Static contact angle>

### (Initial evaluation)

First, as an initial evaluation, after the surface-treating layer was formed, the static water contact angle of the surface with which nothing was brought into contact yet was measured.

### <Friction resistance test against eraser>

Using a rubbing tester (manufactured by Shinto Scientific Co., Ltd.), the water-resisting contact angle was measured every 2,500 rubs under the following conditions, and the test was continued until it reached 15,000 rubs or until the angle became < 100°. The test environment conditions were 25°C and a humidity of 40% RH.
Eraser: Raber Eraser (manufactured by Minoan)
Contact area: 6 mmφ
Moving distance (one way): 30 mm
Moving speed: 3,600 mm/min
Load: 1 kg/6 mmφ

**[Table 2]**

| Surface-treating agent | 0 times | 2,500 times | 5,000 times | 7,500 times | 10,000 times | 12,500 times | 15,000 times |
|---|---|---|---|---|---|---|---|
| 1 | 112 | 114 | 113 | 112 | 104 | 98 | - |
| 2 | 113 | 112 | 112 | 110 | 105 | 101 | 100 |
| 3 | 112 | 111 | 111 | 110 | 107 | 107 | 100 |
| 4 | 113 | 113 | 110 | 108 | 103 | 100 | 94 |
| 5 | 114 | 112 | 109 | 92 | - | - | - |
| 6 | 114 | 107 | 94 | - | - | - | - |
| 7 | 114 | 116 | 116 | 115 | 114 | 99 | - |
| 8 | 113 | 114 | 112 | 110 | 106 | 104 | 96 |
| 9 | 113 | 108 | 103 | 103 | 95 | - | - |
| 10 | 112 | 111 | 110 | 109 | 98 | - | - |
| 11 | 114 | 112 | 98 | - | - | - | - |
| 12 | 113 | 114 | 112 | 102 | 99 | - | - |

### (Preparation of surface-treating agent)

The diluents (9)-(13) were mixed at the proportion shown in Table 3 below to prepare surface-treating agent 13-21. Surface-treating agents 13-15 are Examples, and surface-treating agents 16-21 are Comparative Examples.

**[Table 3]**

| Surface-treating agent | Diluent (9) | Diluent (10) | Diluent (11) | Diluent (12) | Diluent (13) |
|---|---|---|---|---|---|
| 13 | 40 | | 60 | | |
| 14 | | 80 | 20 | | |
| 15 | | 70 | | 30 | |
| 16 | | 80 | | | 20 |
| 17 | 100 | | | | |
| 18 | | 100 | | | |
| 19 | | | 100 | | |
| 20 | | | | 100 | |
| 21 | | | | | 100 |

### (Formation of surface-treating layer)

Surface-treating agents 13-21 were applied to a chemically tempered glass ("Gorilla" glass, manufactured by Corning Incorporated, thickness 0.7 mm) using a vacuum deposition method.

The conditions of the vacuum deposition method were a resistance heating type vapor deposition machine (manufactured by Shincron Co., Ltd.), a chamber size of 1900 mmφ, a vacuum degree of 5.0 E-05, a current value of 240 A, a voltage of 10 V, and a substrate temperature of 40°C.

The coated glass was heated at 150°C for 30 minutes in a thermostatic oven in air to form a cured film.

### (Evaluation of surface-treating layer properties)

The properties of the surface-treating layers obtained by using the surface-treating agents 13-21 were evaluated. The measurement of the static contact angle and the friction resistance test against eraser were performed in the same manner as in the surface-treating agents 1-12. The results are shown in Table 4.

**[Table 4]**

| Surface-treating agent | 0 time | 2,500 times | 5,000 times | 7,500 times | 10,000 times | 12,500 times | 15,000 times |
|---|---|---|---|---|---|---|---|
| 13 | 115 | 116 | 116 | 114 | 111 | 109 | 99 |
| 14 | 114 | 115 | 115 | 113 | 110 | 103 | 97 |
| 15 | 115 | 114 | 112 | 108 | 104 | 101 | 100 |
| 16 | 113 | 110 | 104 | 99 | - | - | - |
| 17 | 112 | 112 | 107 | 108 | 86 | - | - |
| 18 | 114 | 107 | 109 | 82 | - | - | - |
| 19 | 114 | 112 | 109 | 105 | 103 | 79 | - |
| 20 | 114 | 113 | 110 | 108 | 104 | 80 | - |
| 21 | 113 | 76 | - | - | - | - | - |

### Industrial Applicability

The present agent can be suitably utilized to form a surface-treating layer on the surface of a variety of base materials, in particular optical members for which transmission is required.

## Claims

1. An agent, which is a surface-treating agent comprising a compound (A) and a compound (B) which are represented by formula (1) or (2):
R^{F1}_{α}-X^{A}-R^{Si}_{β} (1)
R^{Si}_{γ}-X^{A}-R^{F2}-X^{A}-R^{Si}_{γ} (2)
wherein, each independently at each occurrence,
R^{F1} is Rf¹-R^{F}-O_{q}-;
R^{F2} is -Rf²ₚ-R^{F}-O_{q}-;
Rf¹ is C₁₋₁₆-alkyl optionally substituted with one or more F;
Rf² is C₁₋₆-alkylene optionally substituted with one or more F;
R^{F} is a divalent fluoropolyether group;
p is 0 or 1;
q is 0 or 1;
X^{A} is a single bond or a di- to decavalent organic group;
R^{Si} is a group having a Si atom bonded to a hydrolyzable group;
α is an integer of 1-9;
β is an integer of 1-9; and
γ is an integer of 1-9;
wherein
in compound (A):
R^{F} is R^{F11} which is a group of the formula:
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-wherein R^{Fa} each independently is H, F or Cl; and a-f each independently are an integer of 0-200, with (a+b+c+d+e+f) ≥ 1, and the order of the repeating units in parentheses is not limited;
R^{Si} each independently is of the formula (S11) or (S12):
-C(Z¹-SiR²¹ₚ₁R²²_{q1})₃ (S11)
-Si(Z¹-SiR²¹ₚ₁R²²_{q1})₃ (S12)
wherein, each independently at each occurrence,
Z¹ is C₁₋₆-alkylene, -(CH₂)_{z1}-O-(CH₂)_{z2}- or -(CH₂)_{z3}-phenylene-(CH₂)_{z4}-, wherein z1 is an integer of 1-6, and z2-z4 each independently are an integer of 0-6;
R²¹ is OH or a hydrolyzable group;
R²² is H or a monovalent organic group;
p1 is an integer of 1-3; and
q1 is an integer of 0-2; and
in compound (B):
R^{F} is R^{F21}; which is a group of the formula:
-(OC₆F₁₂)ₐ-(OC₅F₁₀)_{b}-(OC₄F_{B})_{c}-(OC₃R^{Fa}₆)_{d}-(OC₂F₄)ₑ-(OCF₂)_{f}-
wherein a-f and R^{Fa} are as defined for R^{F11}, provided that the structure of each of the repeating units in R^{F21} is same as the structure of each of the repeating units in R^{F11}; and
R^{Si} each independently is of the formula (S2), (S3) or (S4) :
-C(Z¹-SiR²¹ₚ₁R²²_{q1})₂R^{e1} (S2)
-Si(Z¹-SiR²¹ₚ₁R²²_{q1})₂R^{e1} (S3)
-N(Z¹-SiR²¹ₚ₁R²²_{q1})₂ (S4)
Wherein Z¹, R²¹, R²², p1, and q1 are defined in formula (S11) and (S12); and
R^{e1} each independently is H, OH or a monovalent organic group,
provided that a case is excluded, where R^{Si} in compound (A) is of the formula (S12) and R^{Si} in compound (B) is of the formula (S3), and the structure or value of R^{f1}, R^{f2}, p, q, R^{F11}, X^{A}, α, β, γ, Z¹, R²¹, R²², p1, and q1 of compound (A) are completely same as the structure or value of R^{f1}, R^{f2}, p, q, R^{F21}, X^{A}, α, β, γ, Z¹, R²¹, R²², p1, and q1 of compound (B), respectively.

2. The agent of claim 1, wherein R^{Fa} is F.

3. The agent of claim 1 or 2, wherein R^{F11} and R^{F21} are groups of any of the formulae (f1)-(f5):
-(OC₃F₆)_{d}- (f1)
wherein d is an integer of 1-200;
-(OC₄F₈)_{c}-(OC₃F₆)_{d}-(OC₂F₄)ₑ-(OCF₂)_{f}- f2)
wherein c and d each independently are an integer of 0-30, and e and f each independently are an integer of 1-200; with 10 ≤ (c+d+e+f) ≤ 200; and the order of the repeating units in parentheses is not limited;
-(R⁶-R⁷)_{g}- (f3)
wherein R⁶ is OCF₂ or OC₂F₄; R⁷ is OC₂F₄, OC₃F₆, OC₄F₈, OC₅F₁₀, OC₆F₁₂ or a combination of two or three groups selected from these groups; and g is an integer of 2-100;
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f4)
wherein e is an integer of 1-200, and a-d and f each independently are an integer of 0-200, with (a+b+c++d+e+f) ≥ 1, and the order of the repeating units in parentheses is not limited; and
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein f is an integer of 1-200, and a-e each independently are an integer of 0-200, with (a+b+c+d+e+f) ≥ 1, and the order of the repeating units in parentheses is not limited.

4. The agent of any of claims 1-3, wherein the number-average molecular weights of R^{F1} and R^{F2} each is 500-30,000.

5. The agent of any of claims 1-4, wherein in R^{F}, e and f are each independently an integer of 1-200; and the ratio e/f is 0.1-10.

6. The agent of any of claims 1-5, wherein α = β = γ = 1.

7. The agent of any of claims 1-6, wherein X^{A} is C₁₋₂₀-alkylene, -(CH₂)ₛ₅-X⁵³-, -(CH₂)ₛ₅-X⁵³-(CH₂)ₜ₅- -X⁵⁴- or -X⁵⁴-(CH₂)ₜ₅-, wherein
s5 is an integer of 1-20;
X⁵³ is -O-, -CONR⁵⁴-, or -O-CONR⁵⁴-;
R⁵⁴ each independently is H, phenyl or C₁₋₆ alkyl;
t5 is an integer of 1-20; and
X⁵⁴ is -C(O)O-, -CONR⁵⁴- or -O-CONR⁵⁴-.

8. The agent of any of claims 1-7, wherein p1 is 3.

9. The agent of any of claims 1-8, which contains ≥ 5 mass%, preferably 5-95 mass%, of compound (A), based on the total amount of compounds (A) and (B).

10. The agent of any of claims 1-9, wherein R^{Si} in compound (B) is represented by
- formula (S2); or
- formula (S3); or
- formula (S4).

11. The agent of any of claims 1-10, wherein
- R^{Si} in compound (A) is represented by formula (S11), and R^{Si} in compound (B) is represented by formula (S2), (S3) or (S4); or
- R^{Si} in compound (A) is represented by formula (S12), and R^{Si} in compound (B) is represented by formula (S2) or (S4).

12. The agent of any of claims 1-11, further comprising
- one or more other components selected from a fluorine-containing oil, a silicone oil, and a catalyst; and/or
- a solvent.

13. The use of the agent of any of claims 1-12 as an antifouling coating agent or a water-proof coating agent, and/or for vacuum deposition.

14. A pellet comprising the agent of any of claims 1-12.

15. An article, preferably an article which is an optical member, and which comprises a base material and, on a surface of the base material, a layer formed of the agent of any of claims 1-12.

## Patentansprüche

1. Mittel, das ein Oberflächenbehandlungsmittel ist, umfassend eine Verbindung (A) und eine Verbindung (B), dargestellt durch Formel (1) bzw. (2):
R^{F1}_{α}-X^{A}-R^{Si}_{β} (1)
R^{Si}_{γ}-X^{A}-R^{F2}-X^{A}-R^{Si}_{γ} (2)
worin jeweils unabhängig voneinander bei jedem Auftreten
R^{F1} Rf¹-R^{F}-O_{q}- ist;
R^{F2} -Rf²ₚ-R^{F}-O_{q}- ist;
Rf¹ C₁₋₁₆-Alkyl, optional substituiert mit einem oder mehreren F, ist;
Rf² C₁₋₆-Alkylen, optional substituiert mit einem oder mehreren F, ist;
R^{F} eine divalente Fluorpolyethergruppe ist;
p 0 oder 1 ist;
q 0 oder 1 ist;
X^{A} eine Einfachbindung oder eine di- bis decavalente organische Gruppe ist;
R^{Si} eine Gruppe mit einem Si-Atom ist, das an eine hydrolysierbare Gruppe gebunden ist;
α eine ganze Zahl von 1-9 ist;
β eine ganze Zahl von 1-9 ist; und
γ eine ganze Zahl von 1-9 ist;
wobei
in Verbindung (A):
R^{F} R^{F11} ist, das eine Gruppe gemäß der Formel ist:
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
worin R^{Fa} jeweils unabhängig voneinander H, F oder Cl ist; und a-f jeweils unabhängig voneinander eine ganze Zahl von 0-200 sind, wobei (a+b+c+d+e+f) ≥ 1, und die Reihenfolge der Wiederholeinheiten in Klammern nicht limitiert ist;
R^{Si} jeweils unabhängig voneinander gemäß der Formel (S11) oder (S12) ist:
-C(Z¹-SiR²¹ₚ₁R²²_{q1})₃ (S11)
-Si (Z¹-SiR²¹ₚ₁R²²_{q1})₃ (S12)
worin jeweils unabhängig voneinander bei jedem Auftreten
Z¹ C₁₋₆-Alkylen, -(CH₂)_{z1}-O-(CH₂)_{z2}- oder - (CH₂)_{z3}-Phenylen-(CH₂)_{z4}- ist, worin z1 eine ganze Zahl von 1-6 ist und z2-z4 jeweils unabhängig voneinander eine ganze Zahl von 0-6 sind;
R²¹ OH oder eine hydrolysierbare Gruppe ist;
R²² H oder eine monovalente organische Gruppe ist;
p1 eine ganze Zahl von 1-3 ist; und
q1 eine ganze Zahl von 0-2 ist; und
in Verbindung (B):
R^{F} R^{F21} ist; das eine Gruppe gemäß der Formel ist:
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
worin a-f und R^{Fa} wie für R^{F11} definiert sind, mit der Maßgabe, dass die Struktur jeder der Wiederholeinheiten in R^{F21} die gleiche wie die Struktur jeder der Wiederholeinheiten in R^{F11} ist; und
R^{Si} jeweils unabhängig voneinander gemäß der Formel (S2), (S3) oder (S4) ist:
-C(Z¹-SiR²¹ₚ₁R²²_{q1})₂R^{e1} (S2)
-Si(Z¹-SiR²¹ₚ₁R²²_{q1})₂R^{e1} (S3)
-N(Z¹-SiR²¹ₚ₁R²²_{q1})₂ (S4)
worin Z¹, R²¹, R²², p1 und q1 wie in Formel (S11) und (S12) definiert sind; und
R^{e1} jeweils unabhängig voneinander H, OH oder eine monovalente organische Gruppe ist,
mit der Maßgabe, dass ein Fall ausgeschlossen ist, in dem R^{Si} in Verbindung (A) gemäß Formel (S12) ist und R^{Si} in Verbindung (B) gemäß Formel (S3) ist und die Struktur bzw. der Wert von R^{f1}, R^{f2}, p, q, R^{F11}, X^{A}, α, β, γ, Z¹, R²¹, R²², p1 und q1 der Verbindung (A) vollständig gleich der Struktur bzw. dem Wert von R^{f1}, R^{f2}, p, q, R^{F21}, X^{A}, α, β, γ, Z¹, R²¹, R²², p1 und q1 der Verbindung (B) sind.

2. Mittel gemäß Anspruch 1, wobei R^{Fa} F ist.

3. Mittel gemäß Anspruch 1 oder 2, wobei R^{F11} und R^{F21} Gruppen gemäß einer der Formeln (f1)-(f5) sind:
-(OC₃F₆)_{d}- (f1)
worin d eine ganze Zahl von 1-200 ist;
-(OC₄F₈)_{c}-(OC₃F₆)_{d}-(OC₂F₄)ₑ-(OCF₂)_{f}- (f2)
worin c und d jeweils unabhängig voneinander eine ganze Zahl von 0-30 sind und e und f jeweils unabhängig voneinander eine ganze Zahl von 1-200 sind; wobei 10 ≤ (c+d+e+f) ≤ 200; und die Reihenfolge der Wiederholeinheiten in Klammern nicht limitiert ist;
- (R⁶-R⁷)_{g}- (f3)
worin R⁶ OCF₂ oder OC₂F₄ ist; R⁷ OC₂F₄, OC₃F₆, OC₄F₈, OC₅F₁₀, OC₆F₁₂ oder eine Kombination von zwei oder drei Gruppen, ausgewählt aus diesen Gruppen, ist; und g eine ganze Zahl von 2-100 ist;
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f4)
worin e eine ganze Zahl von 1-200 ist und a-d und f jeweils unabhängig voneinander eine ganze Zahl von 0-200 sind, wobei (a+b+c++d+e+f) ≥ 1, und die Reihenfolge der Wiederholeinheiten in Klammern nicht limitiert ist; und
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
worin f eine ganze Zahl von 1-200 ist und a-e jeweils unabhängig voneinander eine ganze Zahl von 0-200 sind wobei (a+b+c+d+e+f) ≥ 1, und die Reihenfolge der Wiederholeinheiten in Klammern nicht limitiert ist.

4. Mittel gemäß einem der Ansprüche 1-3, wobei die zahlenmittleren Molekulargewichte von R^{F1} und R^{F2} jeweils 500-30.000 betragen.

5. Mittel gemäß einem der Ansprüche 1-4, wobei in R^{F} e und f jeweils unabhängig voneinander eine ganze Zahl von 1-200 sind; und das Verhältnis e/f 0,1-10 beträgt.

6. Mittel gemäß einem der Ansprüche 1-5, wobei α = β = γ = 1.

7. Mittel gemäß einem der Ansprüche 1-6, wobei X^{A} C₁₋₂₀-Alkylen, -(CH₂)ₛ₅-X⁵³-, -(CH₂)ₛ₅-X⁵³-(CH₂)ₜ₅-, -X⁵⁴- oder -X⁵⁴-(CH₂)ₜ₅- ist, worin
s5 eine ganze Zahl von 1-20 ist;
X⁵³ -O-, -CONR⁵⁴- oder -O-CONR⁵⁴- ist;
R⁵⁴ jeweils unabhängig voneinander H, Phenyl oder C₁₋₆-Alkyl ist;
t5 eine ganze Zahl von 1-20 ist; und
X⁵⁴ -C(O)O-, -CONR⁵⁴- oder -O-CONR⁵⁴- ist.

8. Mittel gemäß einem der Ansprüche 1-7, wobei p1 3 ist.

9. Mittel gemäß einem der Ansprüche 1-8, das ≥ 5 Massen-%, bevorzugt 5-95 Massen-%, der Verbindung (A), bezogen auf die Gesamtmenge der Verbindungen (A) und (B), enthält.

10. Mittel gemäß einem der Ansprüche 1-9, wobei R^{Si} in Verbindung (B) dargestellt wird durch
- Formel (S2); oder
- Formel (S3); oder
- Formel (S4).

11. Mittel gemäß einem der Ansprüche 1-10, wobei
- R^{Si} in Verbindung (A) durch Formel (S11) dargestellt wird und R^{Si} in Verbindung (B) durch Formel (S2), (S3) oder (S4) dargestellt wird; oder
- R^{Si} in Verbindung (A) durch Formel (S12) dargestellt wird und R^{Si} in Verbindung (B) durch Formel (S2) oder (S4) dargestellt wird.

12. Mittel gemäß einem der Ansprüche 1-11, ferner umfassend
- eine oder mehrere andere Komponenten, ausgewählt aus einem fluorhaltigen Öl, einem Silikonöl und einem Katalysator; und/oder
- ein Lösungsmittel.

13. Verwendung des Mittels gemäß einem der Ansprüche 1-12 als Antifouling-Beschichtungsmittel oder wasserfestes Beschichtungsmittel und/oder zur Vakuumabscheidung.

14. Pellet, umfassend das Mittel gemäß einem der Ansprüche 1-12.

15. Gegenstand, bevorzugt ein Gegenstand, der ein optisches Element ist, und der ein Basismaterial und auf einer Oberfläche des Basismaterials eine Schicht, gebildet aus dem Mittel gemäß einem der Ansprüche 1-12, umfasst.

## Revendications

1. Agent, qui est un agent de traitement de surface comprenant un composé (A) et un composé (B) qui sont représentés par la formule (1) ou (2) :
R^{F1}_{α}-X^{A}-R^{Si}_{β} (1)
R^{Si}_{γ}-X^{A}-R^{F2}-X^{A}-R^{Si}_{γ} (2)
dans lequel, chacun indépendamment, à chaque occurrence,
R^{F1} est Rf¹-R^{F}-O_{q}- ;
R^{F2} est -Rf²ₚ-R^{F}-O_{q}- ;
Rf¹ est un alkyle en C₁₋₁₆ facultativement substitué par un ou plusieurs F ;
Rf² est un alkylène en C₁₋₆ facultativement substitué par un ou plusieurs F ;
R^{F} est un groupe fluoropolyéther divalent ;
p vaut 0 ou 1 ;
q vaut 0 ou 1 ;
X^{A} est une liaison simple ou un groupe organique di- à décavalent ;
R^{Si} est un groupe présentant un atome de Si lié à un groupe hydrolysable ;
α est un nombre entier de 1 à 9 ;
β est un nombre entier de 1 à 9 ; et
γ est un nombre entier de 1 à 9 ;
dans lequel
dans le composé (A) :
R^{F} est R^{F11} qui est un groupe de la formule :
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
dans lequel R^{Fa}, chacun indépendamment, est H, F ou CI ; et a à f, chacun indépendamment, sont un nombre entier de 0 à 200, avec (a+b+c+d+e+f) ≥ 1, et l'ordre des motifs de répétition entre parenthèses n'est pas limité ;
R^{Si} , chacun indépendamment, est de la formule (S11) ou (S12) :
-C(Z¹-SiR²¹ₚ₁R²²_{q1})₃ (S11)
-Si(Z¹-SiR²¹ₚ₁R²²_{q1})₃ (S12)
dans lequel, chacun indépendamment, à chaque occurrence,
Z¹ est un alkylène en C₁₋₆, -(CH₂)_{z1}-O-(CH₂)_{z2}- ou
-(CH₂)_{z3}-phénylène-(CH₂)_{z4}-, dans lequel z1 est un nombre entier de 1 à 6, et z2-z4, chacun indépendamment, sont un nombre entier de 0 à 6 ;
R²¹ est OH ou un groupe hydrolysable ;
R²² est H ou un groupe organique monovalent ;
p1 est un nombre entier de 1 à 3 ; et
q1 est un nombre entier de 0 à 2 ; et dans le composé (B) :
R^{F} est R^{F21} ; qui est un groupe de la formule :
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
dans lequel a-f et R^{Fa} sont tels que définis pour R^{F11}, à condition que la structure de chacun des motifs de répétition dans R^{F21} soit identique à la structure de chacun des motifs de répétition dans R^{F11} ; et
R^{Si} chacun indépendamment, est de la formule (S2), (S3) ou (S4) :
-C(Z¹-SiR²¹ₚ₁R²²_{q1})₂R^{e1} (S2)
-Si(Z¹-SiR²¹ₚ₁R²²_{q1})₂R^{e1} (S3)
-N(Z¹-SiR²¹p1R²²q₁)₂ (S4)
dans lequel Z¹, R²¹, R²², p1, et q1 sont définis dans la formule (S11) et (S12) ; et
R^{e1} , chacun indépendamment, est H, OH ou un groupe organique monovalent,
à condition qu'un cas soit exclu, où R^{Si} dans le composé (A) est de la formule (S12) et R^{Si} dans le composé (B) est de la formule (S3), et la structure ou valeur de R^{f1}, R^{f2}, p, q, R^{F11}, X^{A}, α, β, γ, Z¹, R²¹, R²², p1, et q1 du composé (A) sont complètement identiques à la structure ou valeur de R^{f1}, R^{f2}, p, q, R^{F21}, X^{A}, α, β, γ, Z¹, R²¹, R²², p1, et q1 du composé (B), respectivement.

2. Agent selon la revendication 1, dans lequel R^{Fa} est F.

3. Agent selon la revendication 1 ou 2, dans lequel R^{F11} et R^{F21} sont des groupes selon l'une quelconque des formules (f1)-(f5) :
-(OC₃F₆)_{d}- (f1)
dans lequel d est un nombre entier de 1 à 200 ;
- (OC₄F₈)_{c}-(OC₃F₆)_{d}-(OC₂F₄)ₑ-(OCF₂)_{f}- f2)
dans lequel c et d, chacun indépendamment, sont un nombre entier de 0 à 30, et e et f, chacun indépendamment, sont un nombre entier de 1 à 200 ; avec 10 ≤ (c+d+e+f) ≤ 200 ; et l'ordre des motifs de répétition entre parenthèses n'est pas limité ;
-(R⁶-R⁷)_{g}- (f3)
dans lequel R⁶ est OCF₂ ou OC₂F₄ ; R⁷ est OC₂F₄, OC₃F₆, OC₄F₈, OC₅F₁₀, OC₆F₁₂ ou une combinaison de deux ou trois groupes sélectionnés parmi ces groupes ; et g est un nombre entier de 2 à 100 ;
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f4)
dans lequel e est un nombre entier de 1 à 200, et a à d et f, chacun indépendamment, sont un nombre entier de 0 à 200, avec (a+b+c+d+e+f) ≥ 1, et l'ordre des motifs de répétition entre parenthèses n'est pas limité ; et
-(OC₆F₁₂)ₐ₋(OC₅F₁₀)_{b}-(OC₄F₈)_{c}-(OC₃F₆)_{d}-(OC₂F₄)ₑ-(OCF₂)_{f}- (f5)
dans lequel f est un nombre entier de 1 à 200, et a à e, chacun indépendamment, sont un nombre entier de 0 à 200, avec (a+b+c+d+e+f) ≥ 1, et l'ordre des motifs de répétition entre parenthèses n'est pas limité.

4. Agent selon l'une quelconque des revendications 1 à 3, dans lequel les poids moléculaires moyens en nombre de R^{F1} et R^{F2} sont chacun de 500 à 30 000.

5. Agent selon l'une quelconque des revendications 1 à 4, dans lequel dans R^{F}, e et f sont chacun indépendamment un nombre entier de 1 à 200 ; et le rapport e/f est de 0,1 à 10.

6. Agent selon l'une quelconque des revendications 1 à 5, dans lequel α = β = γ = 1.

7. Agent selon l'une quelconque des revendications 1 à 6, dans lequel X^{A} est un alkylène en C₁₋₂₀, -(CH₂)ₛ₅-X⁵³-, -(CH₂)ₛ₅-X⁵³-(CH₂)ₜ₅- -X⁵⁴- ou -X⁵⁴-(CH₂)ₜ₅-, dans lequel
s5 est un nombre entier de 1 à 20 ;
X⁵³ est -O-, -CONR⁵⁴-, ou -O-CONR⁵⁴- ;
R⁵⁴ , chacun indépendamment, est H, un phényle ou un alkyle en C₁₋₆ ;
t5 est un nombre entier de 1 à 20 ; et
X⁵⁴ est -C(O)O-, -CONR⁵⁴- ou -O-CONR⁵⁴-.

8. Agent selon l'une quelconque des revendications 1 à 7, dans lequel p1 est 3.

9. Agent selon l'une quelconque des revendications 1 à 8, qui contient ≥ 5 % en masse, préférablement de 5 à 95 % en masse, du composé (A), sur la base de la quantité totale des composés (A) et (B).

10. Agent selon l'une quelconque des revendications 1 à 9, dans lequel R^{Si} dans le composé (B) est représenté par
- la formule (S2) ; ou
- la formule (S3) ; ou
- la formule (S4).

11. Agent selon l'une quelconque des revendications 1 à 10, dans lequel
- R^{Si} dans le composé (A) est représenté par la formule (S11), et R^{Si} dans le composé (B) est représenté par la formule (S2), (S3) ou (S4) ; ou
- R^{Si} dans le composé (A) est représenté par la formule (S12), et R^{Si} dans le composé (B) est représenté par la formule (S2) ou (S4).

12. Agent selon l'une quelconque des revendications 1 à 11, comprenant en outre
- un ou plusieurs autres composants sélectionnés parmi une huile contenant du fluor, une huile de silicone, et un catalyseur ; et/ou
- un solvant.

13. Utilisation de l'agent selon l'une quelconque des revendications 1 à 12 en tant qu'agent de revêtement antisalissure ou agent de revêtement étanche à l'eau, et/ou pour dépôt sous vide.

14. Pastille comprenant l'agent selon l'une quelconque des revendications 1 à 12.

15. Article, préférablement un article qui est un élément optique, et qui comprend un matériau de base et, sur une surface du matériau de base, une couche formée de l'agent selon l'une quelconque des revendications 1 à 12.
